(19) Europäisches Patentamt
European Patent Office
Office européen des brevets

(11) EP 3 327 053 B1

(12) EUROPEAN PATENT SPECIFICATION

(45) Date of publication and mention of the grant of the patent:
**25.03.2020 Bulletin 2020/13**

(21) Application number: **16827714.3**

(22) Date of filing: **14.07.2016**

(51) Int Cl.:
***C08F 297/02*** (2006.01) ***C08F 299/00*** (2006.01)
***C08F 4/52*** (2006.01)

(86) International application number:
**PCT/JP2016/070869**

(87) International publication number:
**WO 2017/014154 (26.01.2017 Gazette 2017/04)**

# (54) (METH)ACRYLIC BLOCK COPOLYMER

(METH)ACRYLBLOCKCOPOLYMER

COPOLYMÈRE À BLOC (MÉTH)ACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2015 JP 2015144813**

(43) Date of publication of application:
**30.05.2018 Bulletin 2018/22**

(73) Proprietor: **Kuraray Co., Ltd.**
**Kurashiki-shi, Okayama 710-0801 (JP)**

(72) Inventors:
- **SHIMIZU, Seiya**
**Tsukuba-shi**
**Ibaraki 305-0841 (JP)**
- **TAKAI, Junya**
**Tsukuba-shi**
**Ibaraki 305-0841 (JP)**
- **MATSUURA, Mikiya**
**Tsukuba-shi**
**Ibaraki 305-0841 (JP)**
- **SHACHI, Kenji**
**Tsukuba-shi**
**Ibaraki 305-0841 (JP)**

(74) Representative: **Müller-Boré & Partner Patentanwälte PartG mbB**
**Friedenheimer Brücke 21**
**80639 München (DE)**

(56) References cited:
**WO-A1-2014/148251**
**WO-A1-2014/208500**
**WO-A1-2015/060224**
**WO-A1-2016/027767**
**JP-A- 2011 184 678**
**JP-A- 2016 050 290**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 327 053 B1

## Description

TECHNICAL FIELD

The present invention relates to (meth)acrylic block copolymers that exhibit a high curing rate when irradiated with active energy rays and also have a low viscosity.

BACKGROUND ART

Active energy ray curable materials are known which are cured when irradiated with active energy rays such as UV lights and electron beams. They are used in applications such as adhesives, pressure-sensitive adhesives, paints, inks, coatings and stereolithographic materials.

In particular, active energy ray curable compositions which contain a (meth) acrylic block copolymer having an active energy ray curable group have been studied increasingly because of their potential usefulness in the optical application.

For example, an active energy ray curable composition is known which contains a (meth) acrylic block copolymer obtained by polymerizing n-butyl acrylate to form an acrylic polymer block, then copolymerizing methyl methacrylate and 2-hydroxyethyl methacrylate to form a hydroxyl-containing methacrylic polymer block, and reacting acryloyl chloride on the hydroxyl group of the block copolymer thus obtained so as to introduce the acryloyl group as an active energy ray curable group (see Patent Literature 1).

Another active energy ray curable composition is known which contains a (meth)acrylic block copolymer obtained by copolymerizing methyl methacrylate and 1,1-dimethylpropane-1,3-diol dimethacrylate to form a methacrylic polymer block with a methacryloyl group as an active energy ray curable group, and thereafter polymerizing n-butyl acrylate to form an acrylic polymer block (see Patent Literature 2) .

There has been a demand that active energy ray curable compositions containing such a (meth)acrylic block copolymer described above be curable at a further enhanced rate.

CITATION LIST

PATENT LITERATURE

Patent Literature 1: JP-A-2011-184678
Patent Literature 2: WO 2014/148251

SUMMARY OF INVENTION

TECHNICAL PROBLEM

An object of the present invention is to provide a (meth) acrylic block copolymer that is useful to form an active energy ray curable composition capable of curing at a high curing rate under illumination of active energy rays.

SOLUTION TO PROBLEM

According to the present invention, the above object is achieved by providing:

[1] A (meth)acrylic block copolymer comprising a methacrylic polymer block (a1) and a methacrylic polymer block (a2) that each have an active energy ray curable group including a partial structure (1) of the following general formula (1), and further comprising an acrylic polymer block (B) that has no active energy ray curable groups and is present between the methacrylic polymer block (a1) and the methacrylic polymer block (a2),
the content of monomer units derived from methyl methacrylate relative to all monomer units in the methacrylic polymer block (a1) and the methacrylic polymer block (a2) being not less than 30 mass%,
the content of monomer units derived from an alkyl acrylate ester having an alkyl group with 6 or more carbon atoms relative to all monomer units in the acrylic polymer block (B) being not less than 40 mass%.

[Chem. 1]

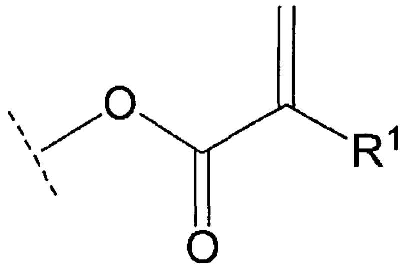

(1)

In the formula (1), $R^1$ is a hydrogen atom or a hydrocarbon group with 1 to 20 carbon atoms.

ADVANTAGEOUS EFFECTS OF INVENTION

An active energy ray curable composition containing the (meth) acrylic block copolymer of the present invention attains a high curing rate when irradiated with active energy rays.

DESCRIPTION OF EMBODIMENTS

The present invention will be described in detail hereinbelow.

A (meth)acrylic block copolymer of the invention has a structure in which an acrylic polymer block (B) is present between a methacrylic polymer block (a1) and a methacrylic polymer block (a2), and the methacrylic polymer block (a1) and the methacrylic polymer block (a2) each have a partial structure (1) .

In the present specification, "(meth)acrylic" is a generic term for "methacrylic" and "acrylic"; " (meth) acryloyl" described later generically refers to "methacryloyl" and "acryloyl"; and "(meth) acrylate" described later is a generic term for "methacrylate" and "acrylate".

The partial structures (1) exhibit polymerizability when irradiated with active energy rays. As a result of this polymerizability, an active energy ray curable composition that contains the (meth)acrylic block copolymer of the invention is cured into a cured product by the application of active energy rays. In the present specification, the term active energy rays means light rays, electromagnetic waves, particle rays and combinations thereof. Examples of the light rays include far-ultraviolet lights, ultraviolet lights (UV), near-ultraviolet lights, visible lights and infrared lights. Examples of the electromagnetic waves include X-rays and $\gamma$-rays. Examples of the particle rays include electron beams (EB), proton beams ($\alpha$ beams) and neutron beams. Of these active energy rays, ultraviolet lights and electron beams are preferable from points of view such as curing rate, and the availability and price of irradiators, with ultraviolet lights being more preferable.

The partial structure (1) is represented by the following general formula (1):

[Chem. 2]

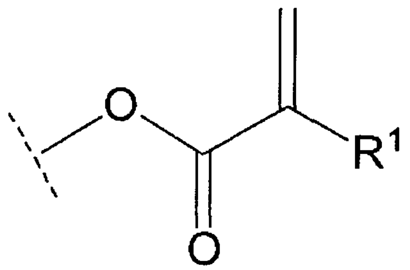

(1)

In the formula (1), $R^1$ is a hydrogen atom or a hydrocarbon group with 1 to 20 carbon atoms.

Examples of the hydrocarbon groups with 1 to 20 carbon atoms represented by $R^1$ in the general formula (1) include alkyl groups such as methyl group, ethyl group, n-propyl group, isopropyl group, n-butyl group, isobutyl group, sec-butyl group, t-butyl group, 2-methylbutyl group, 3-methylbutyl group, 2-ethylbutyl group, 3-ethylbutyl group, 2,2-dimethylbutyl group, 2,3-dimethylbutyl group, n-pentyl group, neopentyl group, n-hexyl group, 2-methylpentyl group, 3-methylpentyl group and n-decyl group; cycloalkyl groups such as cyclopropyl group, cyclobutyl group, cyclopentyl group and cyclohexyl group; aryl groups such as phenyl group and naphthyl group; and aralkyl groups such as benzyl group and phenylethyl group. In particular, from the point of view of active energy ray curability, hydrogen atom, methyl group

and ethyl group are preferable, and methyl group is most preferable.

The (meth)acrylic block copolymer of the invention may be used as an active energy ray curable composition. When, for example, an active energy ray curable composition that includes the (meth) acrylic block copolymer is applied onto a substrate and is cured by the application of active energy rays, a need often arises for the cured product, after its service, to be separated for disposal or other purpose. In such cases, it is desirable that such a cured product be easily released from the substrate by, for example, hygrothermal decomposition. To ensure that good hygrothermal decomposability will be exhibited after curing, it is preferable that the partial structure (1) be part of a partial structure represented by the following general formula (2) (hereinafter, the partial structure will be written as the "partial structure (2)").

[Chem. 3]

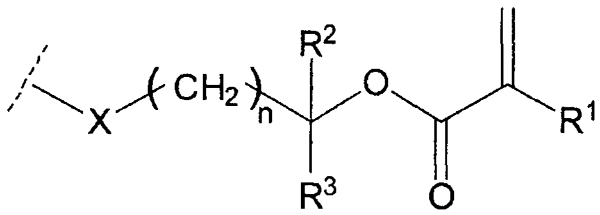

(2)

In the formula (2), $R^1$ is a hydrogen atom or a hydrocarbon group having 1 to 20 carbon atoms, $R^2$ and $R^3$ are each independently a hydrocarbon group having 1 to 6 carbon atoms, X is O, S or $N(R^4)$ ($R^4$ is a hydrogen atom or a hydrocarbon group having 1 to 6 carbon atoms), and n is an integer of 1 to 20.

Specific examples and preferred examples of the hydrocarbon groups with 1 to 20 carbon atoms represented by $R^1$ in the general formula (2) include similar hydrocarbon groups as represented by $R^1$ in the general formula (1).

Examples of the hydrocarbon groups with 1 to 6 carbon atoms represented by $R^2$ and $R^3$ independently in the general formula (2) include alkyl groups such as methyl group, ethyl group, n-propyl group, isopropyl group, n-butyl group, isobutyl group, sec-butyl group, t-butyl group, 2-methylbutyl group, 3-methylbutyl group, 2-ethylbutyl group, 3-ethylbutyl group, 2,2-dimethylbutyl group, 2,3-dimethylbutyl group, n-pentyl group, neopentyl group, n-hexyl group, 2-methylpentyl group and 3-methylpentyl group; cycloalkyl groups such as cyclopropyl group, cyclobutyl group, cyclopentyl group and cyclohexyl group; and aryl groups such as phenyl group. In particular, from the points of view of active energy ray curability and hygrothermal decomposability, methyl group and ethyl group are preferable, and methyl group is most preferable.

In the general formula (2), X is O, S or $N(R^4)$ ($R^4$ is a hydrogen atom or a hydrocarbon group having 1 to 6 carbon atoms) and is preferably O for easy control of polymerization. When X is $N(R^4)$, $R^4$ may represent a hydrocarbon group having 1 to 6 carbon atoms, with examples including alkyl groups such as methyl group, ethyl group, n-propyl group, isopropyl group, n-butyl group, isobutyl group, sec-butyl group, t-butyl group, 2-methylbutyl group, 3-methylbutyl group, 2-ethylbutyl group, 3-ethylbutyl group, 2,2-dimethylbutyl group, 2,3-dimethylbutyl group, n-pentyl group, neopentyl group, n-hexyl group, 2-methylpentyl group and 3-methylpentyl group; cycloalkyl groups such as cyclopropyl group, cyclobutyl group, cyclopentyl group and cyclohexyl group; and phenyl groups.

In the general formula (2), n is an integer of 1 to 20 and, from the points of view of the fluidity and curing rate of the (meth)acrylic block copolymer, is preferably 2 to 5. From the point of view of curing rate, the number of the partial structures (1) present in the molecule of the (meth) acrylic block copolymer of the invention is preferably 2 or more, more preferably 3 or more, still more preferably 4 or more, and particularly preferably 5 or more.

The number of the partial structures (1) present in each of the methacrylic polymer block (a1) and the methacrylic polymer block (a2) is preferably 1 or more, and more preferably 2 or more.

The content of the partial structures (1) is preferably in the range of 0.2 to 70 mol%, more preferably in the range of 10 to 50 mol%, and still more preferably in the range of 25 to 40 mol% relative to all the monomer units constituting the methacrylic polymer block (a1) and the methacrylic polymer block (a2).

The partial structures (1) in the methacrylic polymer block (a1) and the methacrylic polymer block (a2) may be present at a terminal or in a side chain of each methacrylic polymer block. To attain a preferred content of the partial structures (1) that are introduced, it is preferable that the partial structure (1) be present at least in a side chain.

There are no limitations on the content of the partial structures (1) in the methacrylic polymer block (a1) (that is, the molar fraction of the partial structures (1) relative to all the monomer units constituting the methacrylic polymer block (a1)), and on the content of the partial structures (1) in the methacrylic polymer block (a2) (that is, the molar fraction of the partial structures (1) relative to all the monomer units constituting the methacrylic polymer block (a2)). However, these contents are each preferably in the range of 0.2 to 70 mol%, more preferably in the range of 10 to 50 mol%, and still more preferably in the range of 25 to 40 mol%.

In the (meth)acrylic block copolymer of the invention, the content of monomer units derived from methyl methacrylate relative to all the monomer units in the methacrylic polymer block (a1) and the methacrylic polymer block (a2) is not less than 30 mass%, and is preferably not less than 35 mass%, and more preferably not less than 40 mass%. In the (meth) acrylic block copolymer of the invention, the polarity of the methacrylic polymer block (a1) and the methacrylic polymer block (a2) is increased and the active energy ray curability is enhanced as a result of the content of monomer units derived from methyl methacrylate being not less than 30 mass% relative to all the monomer units in the methacrylic polymer block (a1) and the methacrylic polymer block (a2).

From the point of view of active energy ray curability, the content of monomer units derived from methyl methacrylate relative to all the monomer units in the methacrylic polymer block (a1) and the methacrylic polymer block (a2) is preferably not more than 95 mass%, and more preferably not more than 85 mass%.

The methacrylic polymer block (a1) and the methacrylic polymer block (a2) are formed by, for example, polymerizing a monomer(s) including methyl methacrylate.

In a preferred embodiment, each of the methacrylic polymer block (a1) and the methacrylic polymer block (a2) has a content of monomer units derived from methyl methacrylate of not less than 30 mass%. Such monomer units are formed by, for example, polymerizing a monomer(s) including 30 mass% or more methyl methacrylate. When each of the methacrylic polymer block (a1) and the methacrylic polymer block (a2) has a content of monomer units derived from methyl methacrylate of not less than 30 mass%, the active energy ray curability of the (meth)acrylic block copolymer tends to be further enhanced. From the point of view of active energy ray curability, it is preferable that the content of monomer units derived from methyl methacrylate be not less than 30 mass%, and more preferably not less than 35 mass% in each of the methacrylic polymer block (a1) and the methacrylic polymer block (a2). Similarly from the point of view of active energy ray curability, it is preferable that the content of monomer units derived from methyl methacrylate be not more than 95 mass%, and more preferably not more than 85 mass% in each of the methacrylic polymer block (a1) and the methacrylic polymer block (a2).

The methacrylic polymer block (a1) and the methacrylic polymer block (a2) each include monomer units derived from a monomer(s) including a methacrylate ester. Such methacrylate esters are largely classified into monofunctional methacrylate esters having one methacryloyl group, and polyfunctional methacrylate esters having two or more methacryloyl groups.

Examples of the monofunctional methacrylate esters for forming the methacrylic polymer block (a1) and the methacrylic polymer block (a2) include methyl methacrylate, ethyl methacrylate, n-propyl methacrylate, isopropyl methacrylate, n-butyl methacrylate, t-butyl methacrylate, cyclohexyl methacrylate, 2-ethylhexyl methacrylate, isobornyl methacrylate, dodecyl methacrylate, 2-methoxyethyl methacrylate, 2-hydroxyethyl methacrylate, 2-hydroxybutyl methacrylate, trimethoxysilylpropyl methacrylate, 2-aminoethyl methacrylate, N,N-dimethylaminoethyl methacrylate, N,N-diethylaminoethyl methacrylate, phenyl methacrylate, naphthyl methacrylate, 2-(trimethylsilyloxy)ethyl methacrylate, 3-(trimethylsilyloxy)propyl methacrylate, glycidyl methacrylate, $\gamma$-(methacryloyloxypropyl)trimethoxysilane, ethylene oxide adducts of methacrylic acid, trifluoromethylmethyl methacrylate, 2-trifluoromethylethyl methacrylate, 2-perfluoroethylethyl methacrylate, 2-perfluoroethyl-2-perfluorobutylethyl methacrylate, 2-perfluoroethyl methacrylate, perfluoromethyl methacrylate, diperfluoromethylmethyl methacrylate, 2-perfluoromethyl-2-perfluoroethylmethyl methacrylate, 2-perfluorohexylethyl methacrylate, 2-perfluorodecylethyl methacrylate and 2-perfluorohexadecylethyl methacrylate. Of these, alkyl methacrylate esters having an alkyl group with 1 to 5 carbon atoms are preferable, with examples including methyl methacrylate, ethyl methacrylate, n-propyl methacrylate, isopropyl methacrylate, n-butyl methacrylate and t-butyl methacrylate.

The polyfunctional methacrylate ester may be a difunctional methacrylate ester represented by the general formula (3) below (hereinafter, written as the "dimethacrylate (3)"). The use of such an ester is advantageous in that living anionic polymerization under conditions described later takes place in such a manner that one of the methacryloyl groups (the methacryloyl group directly bonded to "$(CH_2)_n$" in the general formula (3)) is polymerized selectively to afford a methacrylic polymer block (a1) and/or a methacrylic polymer block (a2) which has a partial structure (2).

[Chem. 4]

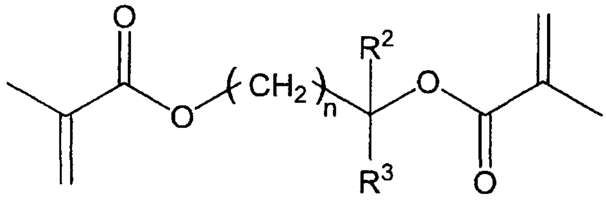

(3)

In the formula (3), $R^2$ and $R^3$ are each independently a hydrocarbon group having 1 to 6 carbon atoms, and n

is an integer of 1 to 20.

Examples of the hydrocarbon groups with 1 to 6 carbon atoms represented by $R^2$ and $R^3$ in the general formula (3) include similar hydrocarbon groups as those represented by $R^2$ and $R^3$ in the general formula (2). In the general formula (3), n indicates an integer of 1 to 20 and is preferably 2 to 5 from the points of view of the fluidity and curing rate of the (meth)acrylic block copolymer.

Specific examples of the dimethacrylates (3) include 1,1-dimethylpropane-1,3-diol dimethacrylate, 1,1-dimethylbutane-1,4-diol dimethacrylate, 1,1-dimethylpentane-1,5-diol dimethacrylate, 1,1-dimethylhexane-1,6-diol dimethacrylate, 1,1-diethylpropane-1,3-diol dimethacrylate, 1,1-diethylbutane-1,4-diol dimethacrylate, 1,1-diethylpentane-1,5-diol dimethacrylate and 1,1-diethylhexane-1,6-diol dimethacrylate. 1,1-Dimethylpropane-1,3-diol dimethacrylate, 1,1-dimethylbutane-1,4-diol dimethacrylate, 1,1-dimethylpentane-1,5-diol dimethacrylate and 1,1-dimethylhexane-1,6-diol dimethacrylate are more preferable.

The methacrylate esters may be used singly, or two or more may be used in combination.

The content of the monomer units derived from the methacrylate ester(s) (including methyl methacrylate) relative to all the monomer units forming the methacrylic polymer block (a1) and the methacrylic polymer block (a2) is preferably not less than 80 mass%, more preferably not less than 90 mass% and still more preferably not less than 95 mass%, and may be 100 mass%. When the methacrylic polymer block (a1) and the methacrylic polymer block (a2) are formed from monomers including a dimethacrylate (3), the content of the monomer units derived from the dimethacrylate (3) is preferably in the range of 0.5 to 70 mass%, more preferably in the range of 20 to 65 mass%, and still more preferably in the range of 45 to 60 mass% relative to all the monomer units forming the methacrylic polymer block (a1) and the methacrylic polymer block (a2). When the methacrylic polymer block (a1) and the methacrylic polymer block (a2) are formed from monomers including methyl methacrylate and a dimethacrylate (3), the total amount of the monomer units derived from methyl methacrylate and the monomer units derived from the dimethacrylate (3) is preferably in the range of 80 to 100 mass% relative to all the monomer units forming the methacrylic polymer block (a1) and the methacrylic polymer block (a2). The total content is more preferably in the range of 90 to 100 mass%, and still more preferably in the range of 95 to 100 mass%, and may be 100 mass% relative to all the monomer units forming the methacrylic polymer block (a1) and the methacrylic polymer block (a2).

In each of the methacrylic polymer block (a1) and the methacrylic polymer block (a2), it is desirable that the content of the monomer units derived from the methacrylate ester(s) (including methyl methacrylate) be preferably not less than 80 mass%, more preferably not less than 90 mass%, still more preferably not less than 95 mass%, and particularly preferably 100 mass%. When the methacrylic polymer block (a1) and the methacrylic polymer block (a2) are formed from monomers including a dimethacrylate (3), it is desirable that the content of the monomer units derived from the dimethacrylate (3) in each of the methacrylic polymer blocks be preferably in the range of 0.5 to 70 mass%, more preferably in the range of 20 to 65 mass%, and still more preferably in the range of 45 to 60 mass%. When the methacrylic polymer block (a1) and the methacrylic polymer block (a2) are formed from monomers including methyl methacrylate and a dimethacrylate (3), it is desirable that in each of the methacrylic polymer block (a1) and the methacrylic polymer block (a2), the total amount of the monomer units derived from methyl methacrylate and the monomer units derived from the dimethacrylate (3) be preferably in the range of 80 to 100 mass%, more preferably in the range of 90 to 100 mass%, still more preferably in the range of 95 to 100 mass%, and particularly preferably 100 mass%.

The methacrylic polymer block (a1) and the methacrylic polymer block (a2) may contain monomer units derived from a monomer other than the methacrylate esters described above. Examples of such additional monomers include acrylate esters such as methyl acrylate, ethyl acrylate, n-propyl acrylate, isopropyl acrylate, n-butyl acrylate, t-butyl acrylate, cyclohexyl acrylate, 2-ethylhexyl acrylate, isobornyl acrylate, dodecyl acrylate, 2-methoxyethyl acrylate, 2-hydroxyethyl acrylate, 2-hydroxybutyl acrylate, trimethoxysilylpropyl acrylate, 2-aminoethyl acrylate, N,N-dimethylaminoethyl acrylate, N,N-diethylaminoethyl acrylate, phenyl acrylate, naphthyl acrylate, 2-(trimethylsilyloxy)ethyl acrylate, 3-(trimethylsilyloxy)propyl acrylate, glycidyl acrylate, $\gamma$-(acryloyloxypropyl)trimethoxysilane, ethylene oxide adducts of acrylic acid, trifluoromethylmethyl acrylate, 2-trifluoromethylethyl acrylate, 2-perfluoroethylethyl acrylate, 2-perfluoroethyl-2-perfluorobutylethyl acrylate, 2-perfluoroethyl acrylate, perfluoromethyl acrylate, diperfluoromethylmethyl acrylate, 2-perfluoromethyl-2-perfluoroethylmethyl acrylate, 2-perfluorohexylethyl acrylate, 2-perfluorodecylethyl acrylate and 2-perfluorohexadecylethyl acrylate; $\alpha$-alkoxyacrylate esters such as methyl $\alpha$-methoxyacrylate and methyl $\alpha$-ethoxyacrylate; crotonate esters such as methyl crotonate and ethyl crotonate; 3-alkoxyacrylate esters such as 3-methoxyacrylate esters; (meth)acrylamides such as N-isopropyl(meth)acrylamide, N-t-butyl(meth)acrylamide, N,N-dimethyl(meth)acrylamide and N,N-diethyl(meth)acrylamide; methyl 2-phenylacrylate, ethyl 2-phenylacrylate, n-butyl 2-bromoacrylate, methyl 2-bromomethylacrylate, ethyl 2-bromomethylacrylate, methyl vinyl ketone, ethyl vinyl ketone, methyl isopropenyl ketone and ethyl isopropenyl ketone. These additional monomers may be used singly, or two or more may be used in combination. The content of the monomer units derived from the additional monomer is preferably not more than 10 mass%, and more preferably not more than 5 mass% relative to all the monomer units forming the methacrylic polymer block (a1) and the methacrylic polymer block (a2). It is desirable that the content of the monomer units derived from the additional monomer be preferably not more than 10 mass%, and more preferably not more than 5 mass% in each of

the methacrylic polymer block (a1) and the methacrylic polymer block (a2).

The number average molecular weight ($Mn_{a1}$) of the methacrylic polymer block (a1) and the number average molecular weight ($Mn_{a2}$) of the methacrylic polymer block (a2) are not particularly limited, but, from points of view such as the handleability, fluidity and mechanical characteristics of the obtainable block copolymer, are each preferably in the range of 500 to 100,000, and more preferably in the range of 1,000 to 10,000. In the specification, the number average molecular weights and the molecular weight distributions described later are values measured by gel permeation chromatography (GPC) (relative to polystyrene standards).

To increase the flexibility of cured products obtained by irradiating the (meth)acrylic block copolymer of the invention with active energy rays, the ratio ($Mn_{a1}$:$Mn_{a2}$) of the number average molecular weight ($Mn_{a1}$) of the methacrylic polymer block (a1) to the number average molecular weight ($Mn_{a2}$) of the methacrylic polymer block (a2) is preferably 20:80 to 80:20, and more preferably 30:70 to 70:30.

The (meth)acrylic block copolymer of the invention includes an acrylic polymer block (B) having no active energy ray curable groups.

In the specification, the term active energy ray curable groups means functional groups which exhibit polymerizability when irradiated with the active energy rays described hereinabove. Examples of the active energy ray curable groups include functional groups having an ethylenic double bond (in particular, an ethylenic double bond represented by the general formula $CH_2$=CR- (wherein R is an alkyl group or a hydrogen atom)) such as (meth)acryloyl group, (meth)acryloyloxy group, vinyl group, allyl group, vinyloxy group, 1, 3-dienyl group and styryl group; epoxy group, oxetanyl group, thiol group and maleimide group.

In the (meth)acrylic block copolymer of the invention, the content of monomer units derived from an alkyl acrylate ester having an alkyl group with 6 or more carbon atoms relative to all the monomer units in the acrylic polymer block (B) is not less than 40 mass%, and is preferably not less than 50 mass%, more preferably not less than 60 mass%, still more preferably not less than 70 mass%, and particularly preferably not less than 80 mass%.

For example, the acrylic polymer block (B) is formed by polymerizing a monomer(s) including an alkyl acrylate ester that has an alkyl group with 6 or more carbon atoms. The (meth)acrylic block copolymer attains an increase in active energy ray curability as a result of the content of the monomer units derived from an alkyl acrylate ester having an alkyl group with 6 or more carbon atoms being not less than 40 mass% relative to all the monomer units in the acrylic polymer block (B). The reason for this is probably because the polarity of the acrylic polymer block (B) is relatively lower than that of the methacrylic polymer block (a1) and the methacrylic polymer block (a2) so that the acrylic polymer block (B) is phase-separated more clearly from the methacrylic polymer block (a1) and the methacrylic polymer block (a2) in the (meth)acrylic block copolymer, and the active energy ray curable groups in the methacrylic polymer block (a1) and the methacrylic polymer block (a2) are aggregated.

Examples of the alkyl acrylate esters having an alkyl group with 6 or more carbon atoms which can form the acrylic polymer blocks (B) include n-hexyl acrylate, n-heptyl acrylate, 2-ethylhexyl acrylate, n-octyl acrylate, isooctyl acrylate, n-nonyl acrylate, n-decyl acrylate, isodecyl acrylate, n-undecyl acrylate, n-dodecyl acrylate, n-stearyl acrylate and isostearyl acrylate. Of these, from the point of view of active energy ray curability, 2-ethylhexyl acrylate, n-octyl acrylate and isooctyl acrylate are preferable. These acrylate esters may be used singly, or two or more may be used in combination.

The acrylic polymer block (B) may contain monomer units derived from an acrylate ester other than the alkyl acrylate esters having an alkyl group with 6 or more carbon atoms.

Examples of such acrylate esters include alkyl acrylate esters having an alkyl group with 5 or less carbon atoms, such as methyl acrylate, ethyl acrylate, n-propyl acrylate, isopropyl acrylate, n-butyl acrylate and t-butyl acrylate; and acrylate esters other than alkyl acrylate esters, such as cyclohexyl acrylate, isobornyl acrylate, phenyl acrylate, benzyl acrylate, naphthyl acrylate, trimethoxysilylpropyl acrylate, N,N-dimethylaminoethyl acrylate, N,N-diethylaminoethyl acrylate, 2-methoxyethyl acrylate, 2-(trimethylsilyloxy)ethyl acrylate and 3-(trimethylsilyloxy)propyl acrylate. These acrylate esters may be used singly, or two or more may be used in combination.

In the acrylic polymer block (B), the content of the monomer units derived from the acrylate ester (s) including the alkyl acrylate ester having an alkyl group with 6 or more carbon atoms is preferably not less than 80 mass% relative to all the monomer units in the acrylic polymer block (B). The content is more preferably not less than 90 mass%, and still more preferably not less than 95 mass%, and may be 100 mass%.

The acrylic polymer block (B) may contain monomer units derived from an additional monomer other than acrylate esters. Examples of such additional monomers include methacrylate esters such as methyl methacrylate, ethyl methacrylate, n-propyl methacrylate, isopropyl methacrylate, n-butyl methacrylate, t-butyl methacrylate, cyclohexyl methacrylate, 2-ethylhexyl methacrylate, isobornyl methacrylate, dodecyl methacrylate, 2-methoxyethyl methacrylate, 2-hydroxyethyl methacrylate, 2-hydroxybutyl methacrylate, trimethoxysilylpropyl methacrylate, 2-aminoethyl methacrylate, N,N-dimethylaminoethyl methacrylate, N,N-diethylaminoethyl methacrylate, phenyl methacrylate, naphthyl methacrylate, 2-(trimethylsilyloxy)ethyl methacrylate, 3-(trimethylsilyloxy)propyl methacrylate, glycidyl methacrylate, γ-(methacryloyloxypropyl)trimethoxysilane, ethylene oxide adducts of methacrylic acid, trifluoromethylmethyl methacrylate, 2-trifluoromethylethyl methacrylate, 2-perfluoroethylethyl methacrylate, 2-perfluoroethyl-2-perfluorobutylethyl methacrylate, 2-perfluoroethyl methacrylate, perfluoromethyl methacrylate, diperfluoromethylmethyl methacrylate, 2-perfluoromethyl-2-perfluoroethylmethyl methacrylate, 2-perfluorohexylethyl methacrylate, 2-perfluorodecylethyl methacrylate and 2-perfluorohexadecylethyl methacrylate; $\alpha$-alkoxyacrylate esters such as methyl $\alpha$-methoxyacrylate and methyl $\alpha$-ethoxyacrylate; crotonate esters such as methyl crotonate and ethyl crotonate; 3-alkoxyacrylate esters such as 3-methoxyacrylate esters; (meth)acrylamides such as N-isopropyl(meth)acrylamide, N-t-butyl(meth)acrylamide, N,N-dimethyl(meth)acrylamide and N,N-diethyl (meth) acrylamide; methyl vinyl ketone, ethyl vinyl ketone, methyl isopropenyl ketone and ethyl isopropenyl ketone. These additional monomers may be used singly, or two or more may be used in combination. The content of the monomer units derived from the additional monomer is preferably not more than 10 mass%, and more preferably not more than 5 mass% relative to all the monomer units forming the acrylic polymer block (B) .

The number average molecular weight ($Mn_b$) of the acrylic polymer block (B) is not particularly limited but, from points of view such as the handleability, fluidity and mechanical characteristics of the obtainable block copolymer, is preferably in the range of 3,000 to 300,000, and more preferably in the range of 5,000 to 200,000.

The content of the acrylic polymer block (B) in the (meth)acrylic block copolymer of the invention is not particularly limited, but is preferably 10 to 98 mass%, and more preferably 50 to 90 mass%. When the content is 10 mass% or above, cured products obtained by curing the (meth) acrylic block copolymer of the invention tend to exhibit excellent flexibility. When the content is 98 mass% or less, the (meth) acrylic block copolymer of the invention tends to attain an outstanding curing rate when irradiated with active energy rays.

The number average molecular weight of the (meth) acrylic block copolymer of the invention is not particularly limited but, from points of view such as handleability, fluidity and mechanical characteristics, is preferably 4,000 to 400,000, and more preferably 7,000 to 200,000. The molecular weight distribution, namely, the weight average molecular weight/number average molecular weight of the (meth)acrylic block copolymer of the invention is preferably not more than 2.00, more preferably in the range of 1.02 to 2.00, still more preferably in the range of 1.05 to 1.80, and most preferably in the range of 1.10 to 1.50.

In the (meth)acrylic block copolymer of the invention, it is preferable that the methacrylic polymer block (a1) and the methacrylic polymer block (a2) be located at the respective ends of the copolymer. While the (meth) acrylic block copolymer of the invention may have an additional polymer block other than the methacrylic polymer block (a1), the methacrylic polymer block (a2) and the acrylic polymer block (B) (for example, may have a polymer block which has no monomer units derived from (meth) acrylate esters), it is preferable that such additional polymer blocks have no active energy ray curable groups in order to ensure that the flexibility of cured products obtained from an active energy ray curable composition containing the (meth)acrylic block copolymer will not be impaired. There may be a plurality of acrylic polymer blocks (B) as long as they are present between the methacrylic polymer block (a1) and the methacrylic polymer block (a2). From the point of view of easy production, a triblock copolymer is preferable in which the methacrylic polymer block (a1) and the methacrylic polymer block (a2) are bonded to the respective ends of one acrylic polymer block (B).

The (meth)acrylic block copolymer of the invention may be produced by any methods without limitation. Anionic polymerization or radical polymerization is preferable. From the point of view of the control of polymerization, living anionic polymerization or living radical polymerization is more preferable, and living anionic polymerization is still more preferable.

Examples of the living radical polymerization processes include polymerization using a chain transfer agent such as polysulfide, polymerization using a cobalt porphyrin complex, polymerization using a nitroxide (see WO 2004/014926), polymerization using a higher-period hetero element compound such as an organotellurium compound (see Japanese Patent No. 3839829), reversible addition-fragmentation chain transfer (RAFT) polymerization (see Japanese Patent No. 3639859), and atom transfer radical polymerization (ATRP) (see Japanese Patent No. 3040172 and WO 2004/013192). Of these living radical polymerization processes, atom transfer radical polymerization is preferable. A more preferred process is atom transfer radical polymerization which uses an organic halide or a halogenated sulfonyl compound as an initiator and is catalyzed by a metal complex having at least one central metal selected from Fe, Ru, Ni and Cu.

Examples of the living anionic polymerization processes include living polymerization using an organic rare earth metal complex as a polymerization initiator (see JP-A-H06-93060), living anionic polymerization performed with an organic alkali metal compound as a polymerization initiator in the presence of a mineral acid salt such as an alkali metal or alkaline earth metal salt (see JP-A-H05-507737), and living anionic polymerization performed with an organic alkali metal compound as a polymerization initiator in the presence of an organoaluminum compound (see JP-A-H11-335432 and WO 2013/141105). Of these living anionic polymerization processes, living anionic polymerization performed with an organic alkali metal compound as a polymerization initiator in the presence of an organoaluminum compound is advantageous in that the (meth) acrylic block copolymer of the invention can be polymerized directly and efficiently. For the same reason, a more preferred process is living anionic polymerization performed with an organolithium

compound as a polymerization initiator in the presence of an organoaluminum compound and a Lewis base.

Examples of the organolithium compounds include t-butyllithium, 1,1-dimethylpropyllithium, 1,1-diphenylhexyllithium, 1,1-diphenyl-3-methylpentyllithium, ethyl $\alpha$-lithioisobutyrate, butyl $\alpha$-lithioisobutyrate, methyl $\alpha$-lithioisobutyrate, isopropyllithium, sec-butyllithium, 1-methylbutyllithium, 2-ethylpropyllithium, 1-methylpentyllithium, cyclohexyllithium, diphenylmethyllithium, $\alpha$-methylbenzyllithium, methyllithium, n-propyllithium, n-butyllithium and n-pentyllithium. From the points of view of availability and anionic polymerization initiating ability, preferred organolithium compounds are those compounds with 3 to 40 carbon atoms which have a chemical structure having a secondary carbon atom as the anionic center, such as isopropyllithium, sec-butyllithium, 1-methylbutyllithium, 1-methylpentyllithium, cyclohexyllithium, diphenylmethyllithium and $\alpha$-methylbenzyllithium, with sec-butyllithium being particularly preferable. The organolithium compounds may be used singly, or two or more may be used in combination.

The amount in which the organolithium compound is used may be determined relative to the amount of the monomers used, in accordance with the target number average molecular weight of the block copolymer.

Examples of the organoaluminum compounds include those organoaluminum compounds represented by the following general formula (A-1) or (A-2).

$$AlR^5(R^6)(R^7) \qquad (A\text{-}1)$$

In the formula, $R^5$ is a monovalent saturated hydrocarbon group, a monovalent aromatic hydrocarbon group, an alkoxy group, an aryloxy group or an N,N-disubstituted amino group, and $R^6$ and $R^7$ are each independently an aryloxy group or $R^6$ and $R^7$ are bonded to each other to form an arylenedioxy group.

$$AlR^8(R^9)(R^{10}) \qquad (A\text{-}2)$$

In the formula, $R^8$ is an aryloxy group, and $R^9$ and $R^{10}$ are each independently a monovalent saturated hydrocarbon group, a monovalent aromatic hydrocarbon group, an alkoxy group or an N,N-disubstituted amino group.

Examples of the aryloxy groups represented by $R^5$, $R^6$, $R^7$ and $R^8$ independently in the general formulae (A-1) and (A-2) include phenoxy group, 2-methylphenoxy group, 4-methylphenoxy group, 2, 6-dimethylphenoxy group, 2,4-di-t-butylphenoxy group, 2,6-di-t-butylphenoxy group, 2,6-di-t-butyl-4-methylphenoxy group, 2,6-di-t-butyl-4-ethylphenoxy group, 2,6-diphenylphenoxy group, 1-naphthoxy group, 2-naphthoxy group, 9-phenanthryloxy group, 1-pyrenyloxy group and 7-methoxy-2-naphthoxy group.

Examples of the arylenedioxy groups formed by $R^6$ and $R^7$ bonded to each other in the general formula (A-1) include functional groups derived from compounds having two phenolic hydroxyl groups by the removal of the hydrogen atoms of the two phenolic hydroxyl groups, such as 2,2'-biphenol, 2,2'-methylenebisphenol, 2,2'-methylenebis(4-methyl-6-t-butylphenol), (R)-(+)-1,1'-bi-2-naphthol and (S)-(-)-1,1'-bi-2-naphthol.

The aryloxy groups and the arylenedioxy groups described above may be substituted by a substituent in place of one or more hydrogen atoms. Examples of the substituents include alkoxy groups such as methoxy group, ethoxy group, isopropoxy group and t-butoxy group; and halogen atoms such as chlorine atom and bromine atom.

Referring to $R^5$, $R^9$ and $R^{10}$ in the general formulae (A-1) and (A-2), examples of the monovalent saturated hydrocarbon groups include alkyl groups such as methyl group, ethyl group, n-propyl group, isopropyl group, n-butyl group, isobutyl group, sec-butyl group, t-butyl group, 2-methylbutyl group, 3-methylbutyl group, n-octyl group and 2-ethylhexyl group, and cycloalkyl groups such as cyclohexyl group; examples of the monovalent aromatic hydrocarbon groups include aryl groups such as phenyl group, and aralkyl groups such as benzyl group; examples of the alkoxy groups include methoxy group, ethoxy group, isopropoxy group and t-butoxy group; and examples of the N,N-disubstituted amino groups include dialkylamino groups such as dimethylamino group, diethylamino group and diisopropylamino group, and bis(trimethylsilyl)amino group. The monovalent saturated hydrocarbon groups, the monovalent aromatic hydrocarbon groups, the alkoxy groups and the N,N-disubstituted amino groups described above may be substituted by a substituent in place of one or more hydrogen atoms. Examples of the substituents include alkoxy groups such as methoxy group, ethoxy group, isopropoxy group and t-butoxy group; and halogen atoms such as chlorine atom and bromine atom.

Examples of the organoaluminum compounds (A-1) include ethylbis(2,6-di-t-butyl-4-methylphenoxy)aluminum, ethylbis(2,6-di-t-butylphenoxy)aluminum, ethyl[2,2'-methylenebis(4-methyl-6-t-butylphenoxy)]aluminu m, isobutylbis(2,6-di-t-butyl-4-methylphenoxy)aluminum, isobutylbis(2,6-di-t-butylphenoxy)aluminum, isobutyl[2,2'-methylenebis(4-methyl-6-t-butylphenoxy)]alum inum, n-octylbis(2,6-di-t-butyl-4-methylphenoxy)aluminum, n-octylbis(2,6-di-t-butylphenoxy)aluminum, n-octyl[2,2'-methylenebis(4-methyl-6-t-butylphenoxy)]alumi num, methoxybis(2,6-di-t-butyl-4-methylphenoxy)aluminum, methoxybis(2,6-di-t-butylphenoxy)aluminum, methoxy[2,2'-methylenebis(4-methyl-6-t-butylphenoxy)]alumi num, ethoxybis(2,6-di-t-butyl-4-methylphenoxy)aluminum, ethoxybis(2,6-di-t-butylphenoxy)aluminum, ethoxy[2,2'-methylenebis(4-methyl-6-t-butylphenoxy)]alumin um, isopropoxybis(2,6-di-t-butyl-4-methylphenoxy)aluminum, isopropoxybis(2,6-di-t-butylphenoxy) aluminum, isopropoxy[2,2'-methylenebis(4-methyl-6-t-butylphenoxy)]al uminum, t-butoxybis(2,6-di-t-butyl-4-methylphenoxy)aluminum, t-butoxybis(2,6-di-t-butylphenoxy)aluminum, t-butoxy[2,2'-methylenebis(4-methyl-6-t-butylphenoxy)]alum inum, tris(2,6-di-t-butyl-4-methylphenoxy)aluminum and tris(2,6-diphenylphenoxy)aluminum. From points of view such as polymerization initiation efficiency, living properties of polymer end anions, availability and easy handling, preferred compounds are, among others, isobutylbis(2,6-di-t-butyl-4-methylphenoxy)aluminum, isobutylbis(2,6-di-t-butylphenoxy)aluminum and isobutyl[2,2'-methylenebis(4-methyl-6-t-butylphenoxy)]alum inum.

Examples of the organoaluminum compounds (A-2) include diethyl(2,6-di-t-butyl-4-methylphenoxy)aluminum, diethyl(2,6-di-t-butylphenoxy)aluminum, diisobutyl(2,6-di-t-butyl-4-methylphenoxy)aluminum, diisobutyl(2,6-di-t-butylphenoxy)aluminum, di-n-octyl(2,6-di-t-butyl-4-methylphenoxy)aluminum and di-n-octyl(2,6-di-t-butylphenoxy)aluminum. The organoaluminum compounds may be used singly, or two or more may be used in combination.

The organoaluminum compound may be used in a suitable amount that is selected appropriately in accordance with factors such as the type of a solvent and other various polymerization conditions. From the point of view of polymerization rate, it is usually preferable that the amount be in the range of 1.0 to 10.0 mol per 1 mol of the organolithium compound, and more preferably in the range of 1.1 to 5.0 mol, and still more preferably in the range of 1.2 to 4.0 mol. Using more than 10.0 mol of the organoaluminum compound per 1 mol of the organolithium compound tends to result in economic disadvantages. If the amount is below 1.0 mol per 1 mol of the organolithium compound, the polymerization initiation efficiency tends to be decreased.

Examples of the Lewis bases include compounds having an ether bond and/or a tertiary amine structure in the molecule.

Examples of the compounds having an ether bond in the molecule which are used as the Lewis bases include ethers. From the points of view of high polymerization initiation efficiency and living properties of polymer end anions, preferred ethers are cyclic ethers having two or more ether bonds in the molecule or noncyclic ethers having one or more ether bonds in the molecule. Examples of the cyclic ethers having two or more ether bonds in the molecule include crown ethers such as 12-crown-4, 15-crown-5, and 18-crown-6. Examples of the noncyclic ethers having one or more ether bonds in the molecule include noncyclic monoethers such as dimethyl ether, diethyl ether, diisopropyl ether, dibutyl ether and anisole; noncyclic diethers such as 1,2-dimethoxyethane, 1,2-diethoxyethane, 1,2-diisopropoxyethane, 1,2-dibutoxyethane, 1,2-diphenoxyethane, 1,2-dimethoxypropane, 1,2-diethoxypropane, 1,2-diisopropoxypropane, 1,2-dibutoxypropane, 1,2-diphenoxypropane, 1,3-dimethoxypropane, 1,3-diethoxypropane, 1,3-diisopropoxypropane, 1,3-dibutoxypropane, 1,3-diphenoxypropane, 1,4-dimethoxybutane, 1,4-diethoxybutane, 1,4-diisopropoxybutane, 1,4-dibutoxybutane and 1,4-diphenoxybutane; and noncyclic polyethers such as diethylene glycol dimethyl ether, dipropylene glycol dimethyl ether, dibutylene glycol dimethyl ether, diethylene glycol diethyl ether, dipropylene glycol diethyl ether, dibutylene glycol diethyl ether, triethylene glycol dimethyl ether, tripropylene glycol dimethyl ether, tributylene glycol dimethyl ether, triethylene glycol diethyl ether, tripropylene glycol diethyl ether, tributylene glycol diethyl ether, tetraethylene glycol dimethyl ether, tetrapropylene glycol dimethyl ether, tetrabutylene glycol dimethyl ether, tetraethylene glycol diethyl ether, tetrapropylene glycol diethyl ether and tetrabutylene glycol diethyl ether. From points of view such as side reaction control and availability, noncyclic ethers having one or two ether bonds in the molecule are preferable, and diethyl ether or 1,2-dimethoxyethane is more preferable.

Examples of the compounds having a tertiary amine structure in the molecule which are used as the Lewis bases include tertiary polyamines. The tertiary polyamines are compounds having two or more tertiary amine structures in the molecule. Examples of the tertiary polyamines include chain polyamines such as N,N,N',N'-tetramethylethylenediamine, N,N,N',N'-tetraethylethylenediamine, N,N,N',N",N"-pentamethyldiethylenetriamine, 1,1,4,7,10,10-hexamethyltriethylenetetramine and tris[2-(dimethylamino)ethyl]amine; nonaromatic heterocyclic compounds such as 1,3,5-trimethylhexahydro-1,3,5-triazine, 1,4,7-trimethyl-1,4,7-triazacyclononane and 1,4,7,10,13,16-hexamethyl-1,4,7,10,13,16-hexaazacyclooctad ecane; and aromatic heterocyclic compounds such as 2,2'-bipyridyl and 2,2':6',2"-terpyridine.

The Lewis base may be a compound which has one or more ether bonds and one or more tertiary amine structures in the molecule. Examples of such compounds include tris[2-(2-methoxyethoxy)ethyl]amine.

The Lewis bases may be used singly, or two or more may be used in combination.

From points of view such as polymerization initiation efficiency and the stability of polymer end anions, the amount in which the Lewis base is used is preferably in the range of 0.3 to 5.0 mol per 1 mol of the organolithium compound, and is more preferably in the range of 0.5 to 3.0 mol, and still more preferably in the range of 1.0 to 2.0 mol. Using more than 5.0 mol of the Lewis base per 1 mol of the organolithium compound tends to result in economic disadvantages. If the amount is below 0.3 mol per 1 mol of the organolithium compound, the polymerization initiation efficiency tends to be decreased.

The amount of the Lewis base is preferably in the range of 0.2 to 1.2 mol, and more preferably in the range of 0.3 to 1.0 mol per 1 mol of the organoaluminum compound.

The living anionic polymerization is preferably performed in the presence of an organic solvent in order to perform the polymerization at a controlled temperature and to render the system uniform so that the polymerization will take place smoothly. From points of view such as safety, immiscibility with water used for washing of the reaction liquid

after the polymerization, and ease in recovery and reuse, preferred organic solvents are, among others, hydrocarbons such as toluene, xylene, cyclohexane and methylcyclohexane; halogenated hydrocarbons such as chloroform, methylene chloride and carbon tetrachloride; and esters such as dimethyl phthalate. The organic solvents may be used singly, or two or more may be used in combination. To ensure that the polymerization will take place smoothly, it is preferable that the organic solvent be dried and be deaerated in the presence of an inert gas beforehand.

In the living anionic polymerization, additives may be added to the reaction system as required. Examples of such additives include inorganic salts such as lithium chloride; metal alkoxides such as lithium methoxyethoxyethoxide and potassium t-butoxide; tetraethylammonium chloride and tetraethylphosphonium bromide.

The living anionic polymerization is preferably performed at -30 to 25°C. At below -30°C, the polymerization rate is decreased and the productivity tends to be deteriorated. If, on the other hand, the temperature is above 25°C, it tends to be difficult to perform the polymerization of monomers including a dimethacrylate (3) with good living properties.

The living anionic polymerization is preferably performed in an atmosphere of an inert gas such as nitrogen, argon or helium. Further, it is preferable that the polymerization be conducted while performing sufficient stirring so that the reaction system will be rendered uniform.

In the living anionic polymerization, the organolithium compound, the organoaluminum compound, the Lewis base and the monomer are preferably added to the reaction system in such a manner that the Lewis base is brought into contact with the organoaluminum compound before contact with the organolithium compound. The organoaluminum compound may be added to the reaction system before or at the same time with the monomer. When the organoaluminum compound and the monomer are added to the reaction system at the same time, the organoaluminum compound may be mixed together with the monomer beforehand and the resultant mixture may be added.

The living anionic polymerization may be terminated by adding to the reaction liquid a polymerization terminator such as a protic compound, for example, methanol; a methanol solution of acetic acid or hydrochloric acid; or an aqueous solution of acetic acid or hydrochloric acid. It is usually preferable that the amount of the polymerization terminator be in the range of 1 to 1000 mol per 1 mol of the organolithium compound used.

After the termination of the living anionic polymerization, the block copolymer may be separated and collected from the reaction liquid by a known method, for example, by a method where the reaction liquid is poured into a poor solvent for the block copolymer to cause precipitation, or a method where the block copolymer is collected by distilling away the organic solvent from the reaction liquid.

If the block copolymer that has been separated and collected contains residual metal components derived from the organolithium compound and the organoaluminum compound, such residual metals may cause problems such as a decrease in the properties of the block copolymer, and poor transparency. It is therefore preferable to remove metal components derived from the organolithium compound and the organoaluminum compound after the termination of the anionic polymerization. Some effective methods for removing such metal components are washing treatment using an acidic aqueous solution, and adsorption treatment using an adsorbent such as ion exchange resin, Celite or activated carbon. Examples of the acidic aqueous solutions which may be used here include hydrochloric acid, aqueous sulfuric acid solution, aqueous nitric acid solution, aqueous acetic acid solution, aqueous propionic acid solution and aqueous citric acid solution.

In the production of the (meth)acrylic block copolymer of the invention, the partial structure (1) may be introduced by the above-described method in which the monomers including a dimethacrylate (3) are polymerized to form a methacrylic polymer block (a1) and a methacrylic polymer block (a2). An alternative method is such that a polymer block containing a partial structure that is a precursor of the active energy ray curable group (1) (hereinafter, the structure will be written as "precursor structure") is formed first and thereafter the precursor structure is converted into the partial structure (1). Such a polymer block containing a precursor structure may be obtained by polymerizing a monomer(s) including a compound which has a polymerizable functional group and a precursor structure (hereinafter, the compound will be written as "polymerizable precursor"). Examples of the polymerizable functional groups include styryl group, 1,3-dienyl group, vinyloxy group and (meth)acryloyl group, with (meth)acryloyl group being preferable. Examples of the precursor structures include hydroxyl groups, hydroxyl groups protected with a protective group (such as a silyloxy group, an acyloxy group or an alkoxy group), amino groups, amino groups protected with a protective group, thiol groups, thiol groups protected with a protective group, and isocyanate groups.

A polymer block which contains a hydroxyl group as the precursor structure may be reacted with a compound which has a partial structure (1) and a partial structure reactive with the hydroxyl group (such as a carboxylic acid, an ester or a carbonyl halide) to form a methacrylic polymer block (a1) and a methacrylic polymer block (a2). A polymer block which contains, as the precursor structure, a hydroxyl group protected with a protective group may be deprotected and the resultant hydroxyl group may be reacted in the similar manner as described above to form a methacrylic polymer block (a1) and a methacrylic polymer block (a2).

A polymer block which contains an amino group as the precursor structure may be reacted with a compound which has a partial structure (1) and a partial structure reactive with the amino group (such as a carboxylic acid, a carboxylic anhydride, an ester, a carbonyl halide, an aldehyde group or an isocyanate group) to form a methacrylic

polymer block (a1) and a methacrylic polymer block (a2). A polymer block which contains, as the precursor structure, an amino group protected with a protective group may be deprotected and the resultant amino group may be reacted in the similar manner as described above to form a methacrylic polymer block (a1) and a methacrylic polymer block (a2).

A polymer block which contains a thiol group as the precursor structure may be reacted with a compound which has a partial structure (1) and a partial structure reactive with the thiol group (such as a carboxylic acid, a carboxylic anhydride, an ester, a carbonyl halide, an isocyanate group or a carbon-carbon double bond) to form a methacrylic polymer block (a1) and a methacrylic polymer block (a2). A polymer block which contains, as the precursor structure, a thiol group protected with a protective group may be deprotected and the resultant thiol group may be reacted in the similar manner as described above to form a methacrylic polymer block (a1) and a methacrylic polymer block (a2).

A polymer block which contains an isocyanate group as the precursor structure may be reacted with a compound which has a partial structure (1) and a partial structure reactive with the isocyanate group (such as a hydroxyl group) to form a methacrylic polymer block (a1) and a methacrylic polymer block (a2) .

In the production of the (meth)acrylic block copolymer of the invention, the methacrylic polymer block (a1) and the methacrylic polymer block (a2) are preferably formed by polymerization, typically living anionic polymerization, of monomers including a dimethacrylate (3). Such a method is advantageous in that the partial structure (2) may be introduced easily and directly.

The (meth)acrylic block copolymer of the invention may be used as a material for an active energy ray curable composition. In such an active energy ray curable composition, the content of the (meth)acrylic block copolymer of the invention is preferably not less than 10 mass%, and more preferably not less than 20 mass%.

The active energy ray curable composition may further contain a photopolymerization initiator. Examples of the photopolymerization initiators include carbonyl compounds such as acetophenones (for example, 1-hydroxycyclohexyl phenyl ketone, 2,2-dimethoxy-1,2-diphenylethan-1-one, 2-hydroxy-2-methyl-1-phenylpropan-1-one and 2-benzyl-2-dimethylamino-1-(4-morpholinophenyl)-1-butanone ), benzophenones (for example, benzophenone, benzoylbenzoic acid, hydroxybenzophenone, 3,3'-dimethyl-4-methoxybenzophenone and acrylated benzophenone), Michler's ketones (for example, Michler's ketone) and benzoins (for example, benzoin, benzoin methyl ether and benzoin isopropyl ether); sulfur compounds such as tetramethylthiuram monosulfide and thioxanthones (for example, thioxanthone and 2-chlorothioxanthone); phosphorus compounds such as acylphosphine oxides (for example, 2,4,6-trimethylbenzoyldiphenylphosphine oxide and bis(2,4,6-trimethylbenzoyl)-phenylphosphine oxide); titanium compounds such as titanocenes (for example, bis($\eta^5$-2,4-cyclopentadien-1-yl)-bis(2,6-difluoro-3-(1H-pyrr ol-1-yl)-phenyl)titanium); and azo compounds (for example, azobisisobutylnitrile). The photopolymerization initiators may be used singly, or two or more may be used in combination. Of these, acetophenones and benzophenones are preferable.

When the photopolymerization initiator is used, the content thereof is preferably 0.01 to 10 parts by mass, and more preferably 0.05 to 8 parts by mass per 100 parts by mass of the (meth)acrylic block copolymer of the invention. When the content is 0.01 parts by mass or above, the active energy ray curable composition tends to attain good curability. When the content is 10 parts by mass or less, the obtainable cured products tend to exhibit good heat resistance.

The active energy ray curable composition may contain a sensitizer as required. Examples of the sensitizers include n-butylamine, di-n-butylamine, tri-n-butylphosphine, allylthiouric acid, triethylamine and diethylaminoethyl methacrylate. Of these, diethylaminoethyl methacrylate and triethylamine are preferable.

When the photopolymerization initiator and the sensitizer are used as a mixture, the mass ratio of the photopolymerization initiator to the sensitizer is preferably in the range of 10:90 to 90:10, and more preferably in the range of 20:80 to 80:20.

While still achieving the advantageous effects of the invention, the active energy ray curable composition may contain a reactive diluent which is other than the (meth) acrylic block copolymer of the invention and exhibits polymerizability when irradiated with active energy rays. Such reactive diluents are not particularly limited and may be any types of compounds that exhibit polymerizability when irradiated with active energy rays. Examples include styrene derivatives such as styrene, indene, p-methylstyrene, $\alpha$-methylstyrene, p-methoxystyrene, p-tert-butoxystyrene, p-chloromethylstyrene, p-acetoxystyrene and divinylbenzene; fatty acid vinyl esters such as vinyl acetate, vinyl propionate, vinyl butyrate, vinyl caproate, vinyl benzoate and vinyl cinnamate; (meth)acrylic acid derivatives such as methyl (meth)acrylate, ethyl (meth)acrylate, n-propyl (meth)acrylate, isopropyl (meth)acrylate, n-butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, stearyl (meth)acrylate, isostearyl (meth)acrylate, benzyl (meth)acrylate, isobornyl (meth)acrylate, bornyl (meth)acrylate, tricyclodecanyl (meth)acrylate, dicyclopentanyl (meth)acrylate, dicyclopentenyloxyethyl (meth)acrylate, 4-butylcyclohexyl (meth)acrylate, 2-hydroxyethyl (meth)acrylate, 2-hydroxypropyl (meth)acrylate, 2-hydroxybutyl (meth)acrylate, 4-hydroxybutyl (meth)acrylate, tetrahydrofurfuryl (meth)acrylate, butoxyethyl (meth)acrylate, ethoxydiethylene glycol (meth)acrylate, phenoxyethyl (meth)acrylate, polyethylene glycol mono(meth)acrylate ester, polypropylene glycol mono(meth)acrylate ester, methoxyethylene glycol (meth)acrylate, ethoxyethyl (meth)acrylate, methoxypolyethylene glycol (meth)acrylate, methoxypolypropylene glycol (meth)acrylate, dimethylaminoethyl (meth)acrylate, diethylaminoethyl (meth)acrylate, 7-amino-3,7-dimethyloctyl (meth)acrylate, 4-(meth)acryloylmorpholine, trimethylolpropane tri(meth)acrylate, trimethylolpropane ethoxytri(meth)acrylate, pentaerythritol tri(meth)acrylate, ethylene glycol di(meth)acrylate, triethylene glycol diacrylate, tetraethylene glycol di(meth)acrylate, tricyclodecanediyldimethanol di(meth)acrylate, polyethylene glycol di(meth)acrylate, 1,4-butanediol di(meth)acrylate, 1,6-hexanediol di(meth)acrylate, tripropylene glycol di(meth)acrylate, neopentyl glycol di(meth)acrylate, adduct of bisphenol A diglycidyl ether with (meth)acrylic acid at both ends, pentaerythritol tetra(meth)acrylate, 2,4,6-trioxohexahydro-1,3,5-triazine-1,3,5-trisethanol tri(meth)acrylate, N,N'-bis[2-((meth)acryloyloxy)ethyl]-N''-(2-hydroxyethyl)-1,3,5-triazine-2,4,6(1H,3H,5H)-trione, tricyclodecanedimethanol di(meth)acrylate, di(meth)acrylate of a diol that is an adduct of bisphenol A with ethylene oxide or propylene oxide, di (meth) acrylate of a diol that is an adduct of hydrogenated bisphenol A with ethylene oxide or propylene oxide, epoxy (meth)acrylate that is an adduct of bisphenol A diglycidyl ether with (meth)acrylate, and cyclohexanedimethanol di(meth)acrylate; epoxy acrylate-based resins such as bisphenol A epoxy acrylate resin, phenol novolak epoxy acrylate resin and cresol novolak epoxy acrylate resin; COOH group-modified epoxy acrylate-based resins; urethane acrylate-based resins obtained by the reaction of a urethane resin formed between a polyol (such as polytetramethylene glycol, polyester diol of ethylene glycol and adipic acid, ε-caprolactone-modified polyester diol, polypropylene glycol, polyethylene glycol, polycarbonate diol, hydroxyl-terminated hydrogenated polyisoprene, hydroxyl-terminated polybutadiene or hydroxyl-terminated polyisobutylene) and an organic isocyanate (such as tolylene diisocyanate, isophorone diisocyanate, diphenylmethane diisocyanate, hexamethylene diisocyanate or xylylene diisocyanate), with a hydroxyl group-containing (meth)acrylate {such as hydroxyethyl (meth)acrylate, hydroxypropyl (meth)acrylate, hydroxybutyl (meth)acrylate or pentaerythritol triacrylate}; resins obtained by introducing a (meth)acrylate group to the above polyols via an ester bond; polyester acrylate-based resins; and epoxy compounds such as epoxidized soybean oil and benzyl epoxystearate. These reactive diluents may be used singly, or two or more may be used in combination.

The active energy ray curable composition may contain various additives free from active energy ray curable groups, such as plasticizers, tackifiers, softeners, fillers, stabilizers, pigments and dyes, while still ensuring that the curability of the composition will not be significantly impaired.

The plasticizers may be added to the active energy ray curable composition for purposes such as, for example, to control the viscosity of the active energy ray curable composition and to control the mechanical strength of cured products obtained by curing the active energy ray curable composition. Examples of the plasticizers include phthalate esters such as dibutyl phthalate, diheptyl phthalate, di(2-ethylhexyl) phthalate and butyl benzyl phthalate; nonaromatic dibasic acid esters such as dioctyl adipate, dioctyl sebacate, dibutyl sebacate and isodecyl succinate; aliphatic esters such as butyl oleate and methyl acetylricinoleate; esters of polyalkylene glycols such as diethylene glycol dibenzoate, triethylene glycol dibenzoate and pentaerythritol ester; phosphate esters such as tricresyl phosphate and tributyl phosphate; trimellitate esters; diene-based (co)polymers such as polybutadiene, butadiene-acrylonitrile copolymer and polychloroprene; polybutene; polyisobutylene; chlorinated paraffins; hydrocarbon-based oils such as alkyldiphenyls and partially hydrogenated terphenyls; process oils; polyethers such as polyether polyols, for example, polyethylene glycol, polypropylene glycol and polytetramethylene glycol, and derivatives obtained by converting hydroxyl groups of the polyether polyols into ester groups, ether groups or the like; and polyesters obtained from a dibasic acid such as sebacic acid, adipic acid, azelaic acid or phthalic acid, and a dihydric alcohol such as ethylene glycol, diethylene glycol, triethylene glycol, propylene glycol or dipropylene glycol. The term "(co)polymers" indicates both homopolymers and copolymers. The plasticizers may be used singly, or two or more may be used in combination.

The molecular weight or number average molecular weight of the plasticizers is preferably 400 to 15000, more preferably 800 to 10000, and still more preferably 1000 to 8000. The plasticizers may contain functional groups other than active energy ray curable groups (such as, for example, hydroxyl groups, carboxyl groups and halogen groups) or may be free from such functional groups. With the molecular weight or number average molecular weight of the plasticizer being 400 or above, the plasticizer is prevented from bleeding out with time from a cured product of the active energy ray curable composition and thus it is possible to maintain the initial properties over a long term. By virtue of the molecular weight or number average molecular weight of the plasticizer being 15000 or less, the active energy ray curable composition tends to exhibit good handleability.

When the plasticizer is added to the active energy ray curable composition, the content thereof is preferably 5 to 150 parts by mass, more preferably 10 to 120 parts by mass, and still more preferably 20 to 100 parts by mass per 100 parts by mass of the (meth) acrylic block copolymer of the invention. When added in 5 parts by mass or more, the plasticizer tends to provide marked effects in the control of properties and characteristics . When the content is 150 parts by mass or less, cured products obtained by curing the active energy ray curable composition tend to attain excellent mechanical strength.

The tackifiers may be added to the active energy ray curable composition for purposes such as, for example, to impart tackiness to cured products obtained from the active energy ray curable composition. Examples of the tackifiers include tackifier resins such as coumarone·indene resins, phenolic resins, p-t-butylphenol·acetylene resins, phenol·formaldehyde resins, xylene·formaldehyde resins, aromatic hydrocarbon resins, aliphatic hydrocarbon resins (for example,

terpene resins), styrene-based resins (for example, polystyrene and poly-α-methylstyrene), polyhydric alcohol rosin esters, hydrogenated rosins, hydrogenated wood rosins, esters of hydrogenated rosins with monoalcohols or polyhydric alcohols, and turpentine tackifier resins. In particular, preferred tackifiers are aliphatic hydrocarbon resins, polyhydric alcohol rosin esters, hydrogenated rosins, hydrogenated wood rosins, and esters of hydrogenated rosins with monoalcohols or polyhydric alcohols.

When the tackifier is added to the active energy ray curable composition, the content thereof is preferably 5 to 150 parts by mass, more preferably 10 to 120 parts by mass, and still more preferably 20 to 100 parts by mass per 100 parts by mass of the (meth) acrylic block copolymer of the invention. When added in 5 parts by mass or more, the tackifier tends to provide cured products with significant tackiness. When the content is 150 parts by mass or less, cured products tend to attain excellent flexibility.

The additives free from active energy ray curable groups may be organic compounds or inorganic compounds.

To cure the (meth)acrylic block copolymer of the invention, or an active energy ray curable composition including the (meth)acrylic block copolymer, active energy rays may be applied with known devices . In the case of electron beams (EB), the accelerating voltage and the dosage are appropriately in the range of 0.1 to 10 MeV and in the range of 1 to 500 kGy, respectively.

Ultraviolet lights may be applied with devices such as high-pressure mercury lamps, ultrahigh-pressure mercury lamps, carbon arc lamps, metal halide lamps, xenon lamps, chemical lamps and LEDs which each emit 150-450 nm wavelength lights. The cumulative dose of the active energy rays is usually in the range of 10 to 20000 $mJ/cm^2$, and preferably in the range of 30 to 5000 $mJ/cm^2$. Irradiation with less than 10 $mJ/cm^2$ tends to result in insufficient curing of the (meth)acrylic block copolymer. The (meth)acrylic block copolymer may be degraded if the cumulative dose is greater than 20000 $mJ/cm^2$.

When the (meth) acrylic block copolymer of the invention, or an active energy ray curable composition including the (meth) acrylic block copolymer is irradiated with active energy rays, the irradiation preferably takes place at a relative humidity of not more than 30%, and more preferably not more than 10% to restrain the decomposition of the (meth)acrylic block copolymer.

During or after the irradiation of the (meth)acrylic block copolymer of the invention, or an active energy ray curable composition including the (meth)acrylic block copolymer with active energy rays, heating may be performed as required to promote curing. The heating temperature is preferably in the range of 40 to 130°C, and more preferably in the range of 50 to 100°C.

The (meth)acrylic block copolymer of the invention, or an active energy ray curable composition including the (meth) acrylic block copolymer may be applied as, for example, an adhesive or a coating agent onto a substrate and may be thereafter cured. When a need arises for the cured product to be separated from the substrate for disposal or other purpose, hygrothermal decomposition is suitably adopted from the points of view of workability and economic efficiency, and thereby the cured product may be easily released and separated from the substrate.

The hygrothermal decomposition temperature is preferably 100 to 250°C, and more preferably 130 to 220°C. The hygrothermal decomposition relative humidity is preferably 10 to 100%, and more preferably 30 to 100%. The hygrothermal decomposition time is preferably 1 minute to 24 hours, more preferably 1 minute to 5 hours, and still more preferably 1 minute to 2 hours.

EXAMPLES

The present invention will be described in greater detail based on Examples and Comparative Examples hereinbelow. However, it should be construed that the scope of the invention is not limited to such Examples.

In Examples and Comparative Examples below, raw materials that were used had been dried and purified by known methods and deaerated in nitrogen. They were transferred and fed in a nitrogen atmosphere.

[Monomer consumption rate]

In Examples and Comparative Examples, the rate of consumption of a monomer after polymerization was calculated in the following manner. 0.5 ml of the reaction liquid was sampled and was added to 0.5 ml of methanol, and these were mixed together. A 0.1 ml portion of the mixture liquid was sampled and was dissolved into 0.5 ml of deuterated chloroform. The solution was analyzed by $^1$H-NMR under the conditions described later. The consumption rate was calculated based on the change in the ratio of the integral of a peak assigned to the protons directly bonded to the carbon-carbon double bond of the (meth) acrylate ester used as the monomer (chemical shift 5.79-6.37 ppm) to the integral of a peak assigned to the protons directly bonded to the aromatic ring of toluene used as the solvent (chemical shift 7.00-7.38 ppm).

($^1$H-NMR measurement conditions)

Apparatus: nuclear magnetic resonance apparatus "JNM-ECX400" manufactured by JEOL Ltd.
Temperature: 25°C

[Number average molecular weight (Mn) and molecular weight distribution (Mw/Mn)]

A polymer obtained in any of Examples and Comparative Examples was analyzed by GPC (gel permeation chromatography) under the following conditions to determine the number average molecular weight (Mn) relative to polystyrene standards, and the molecular weight distribution (Mw/Mn).

(GPC measurement conditions)

Apparatus: GPC apparatus "HLC-8220GPC" manufactured by TOSOH CORPORATION
Separation columns: "TSKgel Super Multipore HZ-M (column diameter = 4.6 mm, column length = 15 cm) " manufactured by TOSOH CORPORATION (Two columns were connected in series.)
Eluent: tetrahydrofuran
Eluent flow rate: 0.35 ml/min
Column temperature: 40°C
Detection method: differential refractive index (RI)

[Polymerization initiation efficiency]

The polymerization initiation efficiency (F1) in Step (1) was calculated using the following equation wherein Mn (R1) was the Mn of a polymer actually obtained in Step (1) and Mn (I1) was the Mn (calculated value) of a polymer obtained in Step (1) provided that the polymerization initiation efficiency was 100%.

$$F1\ (\%) = 100 \times Mn\ (I1)/Mn\ (R1)$$

[Block efficiency between Step (1) and Step (2)]

The block efficiency (F2) between Step (1) and Step (2) was calculated using the following equation wherein Mn (R1) and Mn (I1) were as described above, Mn (R2) was the Mn of a polymer actually obtained in Step (2), and Mn (12) was the Mn (calculated value) of a polymer obtained in Step (2) provided that the block efficiency was 100%.

$$F2\ (\%) = 10000 \times \{Mn\ (I2) - Mn\ (I1)\}/[F1 \times \{Mn\ (R2) - Mn\ (R1)\}]$$

[Contents of monomer units forming (meth)acrylic block copolymer]

The contents of respective types of monomer units forming a (meth)acrylic block copolymer obtained in any of Examples and Comparative Examples were calculated by the following method.

0.01 g of the (meth) acrylic block copolymer obtained was dissolved into 0.5 ml of deuterated chloroform, and the solution was analyzed by $^1$H-NMR. The contents were calculated from the integral ratio of a peak (near 6.0 ppm) assigned to the protons directly bonded to the carbon-carbon double bond in the methacryloyl group ($-O-C(=O)-C(=CH_2)-CH_3$) in 1,1-dimethylpropane-1,3-diol dimethacrylate units, a peak (near 3.6 ppm) assigned to the protons in the methoxy group ($-O-CH_3$) in methyl methacrylate units, a peak (near 3.9 ppm) assigned to the protons in methylene directly bonded to the oxygen atom in the 2-ethylhexyloxy group ($-O-CH_2-CH(CH_2-CH_3)-CH_2-CH_2-CH_2-CH_3$) of 2-ethylhexyl methacrylate units, a peak (near 3.9 ppm) assigned to the protons in methylene directly bonded to the oxygen atom in the 2-ethylhexyloxy group ($-O-CH_2-CH(CH_2-CH_3)-CH_2-CH_2-CH_2-CH_3$) of 2-ethylhexyl acrylate units, and a peak (near 4.0 ppm) assigned to the protons in methylene directly bonded to the oxygen atom in the n-butoxy group ($-O-CH_2-CH_2-CH_2-CH_3$) of n-butyl acrylate units.

Regarding the (meth)acrylic block copolymer (3') obtained in Comparative Example 3, it was difficult to distinguish the peak (near 3.9 ppm) assigned to the methylene protons in the 2-ethylhexyl methacrylate units from the peak

(near 3.9 ppm) assigned to the methylene protons in the 2-ethylhexyl acrylate units. Thus, the contents were calculated from the ratio in which the monomers had been used, assuming that the monomers used had been completely polymerized to form the (meth)acrylic block copolymer obtained.

($^1$H-NMR measurement conditions)

Apparatus: nuclear magnetic resonance apparatus "JNM-ECX400" manufactured by JEOL Ltd.
Solvent: deuterated chloroform
Temperature: 25°C

[Viscosity]

The viscosity of (meth) acrylic block copolymers obtained in Examples and Comparative Examples was evaluated with a viscosity/viscoelasticity measuring device (MARS III manufactured by HAAKE).

Onto a 1°-cone plate having a diameter of 35 mm, 1 g of the block copolymer obtained in any of Examples and Comparative Examples was dropped to form a film. The measurement mode was steady-flow viscosity measurement mode. The viscosity (Pa·s) was measured at a measurement temperature of 25°C, a measurement gap of 0.05 mm and a shear rate of 1 (1/s).

[Curing rate (reaction degree)]

The curing rate of active energy ray curable compositions obtained in Examples and Comparative Examples was evaluated with a viscosity/viscoelasticity measuring device (MARS III manufactured by HAAKE).

Onto parallel plates having a diameter of 20 mm, 1 g of the block copolymer composition obtained in any of Examples and Comparative Examples was dropped to form a film. The measurement mode was high-speed OSC time dependent measurement mode. The viscoelasticity was measured at a measurement temperature of 25°C, a measurement gap of 0.15 mm and a measurement frequency of 5 Hz while irradiating the film with a UV light from a UV lamp (Omni Cure Series 2000 manufactured by Lumen Dynamics, intensity 150 mW/cm$^2$).

As an indicator of curing rate, the reaction degree (%) was obtained using the following equation wherein G' (0) was the storage shear modulus (Pa) at the start of UV application, G' (3.6) the storage shear modulus (Pa) after 3.6 seconds from the start of UV application (after application of 540 mJ/cm$^2$), and G' (16) the storage shear modulus (Pa) saturated in 16 seconds from the start of UV application (after application of 2400 mJ/cm$^2$).

$$\text{Reaction degree (\%)} = \{G'(3.6) - G'(0)\}/\{G'(16) - G'(0)\} \times 100$$

[Example 1]

(Step (1))

The inside of a 3 L flask was dried and purged with nitrogen, and 1.30 kg of toluene was added thereto. While performing stirring of the solution in the flask, there were sequentially added 1.6 g (6.8 mmol) of 1,1,4,7,10,10-hexamethyltriethylenetetramine as a Lewis base and 16.1 g (8.1 mmol) of a 26.4 mass% toluene solution of isobutylbis(2,6-di-t-butyl-4-methylphenoxy)aluminum as an organoaluminum compound. The mixture was cooled to -20°C. Further, 4.0 g (6.5 mmol) of a 10.5 mass% cyclohexane solution of sec-butyllithium as an organolithium compound was added, followed by the addition at once of 8.6 g of a monomer mixture which included 4.7 g (19.5 mmol) of 1,1-dimethylpropane-1,3-diol dimethacrylate and 3.9 g (39 mmol) of methyl methacrylate. Anionic polymerization was thus initiated. After the completion of the addition of the mixture, the reaction liquid turned from original yellow to colorless in 160 minutes. The reaction liquid was stirred for another 20 minutes, and was sampled.

In Step (1), the rates of consumption of 1,1-dimethylpropane-1,3-diol dimethacrylate and methyl methacrylate were 100%. The polymer obtained had a Mn (Mn (R1)) of 1,330 and a Mw/Mn of 1.15. Further, the polymerization initiation efficiency (F1) in Step (1) was 99%.

(Step (2))

Subsequently, while performing stirring of the reaction liquid at -20°C, 12.9 g (6.5 mmol) of a 26.4 mass%

toluene solution of isobutylbis(2,6-di-t-butyl-4-methylphenoxy)aluminum as an organoaluminum compound was added. After 1 minute thereafter, 410 g (2.22 mol) of 2-ethylhexyl acrylate as a monomer was added at a rate of 5 g/min. Immediately after the completion of the addition of the monomer, the reaction liquid was sampled.

In Step (2), the rate of consumption of 2-ethylhexyl acrylate was 100%. The polymer obtained had a Mn (Mn (R2)) of 65,600 and a Mw/Mn of 1.19. Further, the block efficiency (F2) between Step (1) and Step (2) was 99%.

(Step (3))

Subsequently, while performing stirring of the reaction liquid at -20°C, there was added at once 6.8 g of a monomer mixture which included 3.7 g (15.5 mmol) of 1,1-dimethylpropane-1,3-diol dimethacrylate and 3.1 g (30.9 mmol) of methyl methacrylate. The temperature was increased to 20°C at a rate of 2°C/min. The reaction liquid was sampled after 300 minutes from the addition of the mixture.

In Step (3), the rates of consumption of 1,1-dimethylpropane-1,3-diol dimethacrylate and methyl methacrylate were 100%.

(Step (4))

The anionic polymerization was terminated by adding 32.6 g of a 50 mass% aqueous acetic acid solution while performing stirring of the reaction liquid at 20°C. A solution was thus obtained which contained a (meth)acrylic block copolymer that was a triblock copolymer composed of a methacrylic polymer block (a1), an acrylic polymer block (B) and a methacrylic polymer block (a2) linked in this order, i.e., (a1-B-a2). The (meth)acrylic block polymer sampled from the solution had a Mn of 67,000 and a Mw/Mn of 1.20.

(Step (5))

While performing stirring, the solution obtained above was heated at 90°C for 90 minutes under a stream of nitrogen, and thereby acetate salts of the catalytic metals were formed. The reaction liquid was cooled to 25°C and was thereafter centrifuged with a centrifuge (himac CR22GII manufactured by Hitachi Koki Co., Ltd.) at a centrifugal force of 18, 800 G for 30 minutes to precipitate the acetate salts. The supernatant was recovered, and the solvent was removed from the recovered supernatant at 60°C with use of an evaporator. The residue was dried at 100°C and 30 Pa, and the (meth) acrylic block copolymer (hereinafter, written as " (meth) acrylic block copolymer (1)") weighing 410 g was obtained. The viscosity of the (meth) acrylic block copolymer (1) was measured. The result is described in Table 1.

(Step (6))

As a photopolymerization initiator, 1-hydroxycyclohexyl phenyl ketone (IRGACURE 184 manufactured by Ciba Specialty Chemicals) was added in a ratio of 2 g to 100 g of the (meth)acrylic block copolymer (1), and was dissolved therein by stirring. Thus, 102 g of an active energy ray curable composition was obtained. The curing rate of the active energy ray curable composition was evaluated. The result is described in Table 2.

[Comparative Example 1]

(Step (1))

The inside of a 3 L flask was dried and purged with nitrogen, and 1.30 kg of toluene was added thereto. While performing stirring of the solution in the flask, there were sequentially added 1.6 g (6.8 mmol) of 1,1,4,7,10,10-hexamethyltriethylenetetramine as a Lewis base and 16.1 g (8.1 mmol) of a 26.4 mass% toluene solution of isobutylbis(2,6-di-t-butyl-4-methylphenoxy)aluminum as an organoaluminum compound. The mixture was cooled to -20°C. Further, 4.0 g (6.5 mmol) of a 10.5 mass% cyclohexane solution of sec-butyllithium as an organolithium compound was added, followed by the addition at once of 8.6 g of a monomer mixture which included 4.7 g (19.5 mmol) of 1,1-dimethylpropane-1,3-diol dimethacrylate and 3.9 g (39 mmol) of methyl methacrylate. Anionic polymerization was thus initiated. After the completion of the addition of the mixture, the reaction liquid turned from original yellow to colorless in 160 minutes. The reaction liquid was stirred for another 20 minutes, and was sampled.

In Step (1), the rates of consumption of 1,1-dimethylpropane-1,3-diol dimethacrylate and methyl methacrylate were 100%. The polymer obtained had a Mn (Mn (R1)) of 1,330 and a Mw/Mn of 1.15. Further, the polymerization initiation efficiency (F1) in Step (1) was 99%.

(Step (2))

Subsequently, while performing stirring of the reaction liquid at -20°C, 12.9 g (6.5 mmol) of a 26.4 mass% toluene solution of isobutylbis(2,6-di-t-butyl-4-methylphenoxy)aluminum as an organoaluminum compound was added. After 1 minute thereafter, 410 g (3.20 mol) of n-butyl acrylate as a monomer was added at a rate of 5 g/min. Immediately after the completion of the addition of the monomer, the reaction liquid was sampled.

In Step (2), the rate of consumption of n-butyl acrylate was 100%. The polymer obtained had a Mn (Mn (R2)) of 80,800 and a Mw/Mn of 1.19. Further, the block efficiency (F2) between Step (1) and Step (2) was 80%.

(Step (3))

Subsequently, while performing stirring of the reaction liquid at -20°C, there was added at once 6.8 g of a monomer mixture which included 3.7 g (15.5 mmol) of 1,1-dimethylpropane-1,3-diol dimethacrylate and 3.1 g (30.9 mmol) of methyl methacrylate. The temperature was increased to 20°C at a rate of 2°C/min. The reaction liquid was sampled after 300 minutes from the addition of the mixture.

In Step (3), the rates of consumption of 1,1-dimethylpropane-1,3-diol dimethacrylate and methyl methacrylate were 100%.

(Step (4))

The anionic polymerization was terminated by adding 32.6 g of a 50 mass% aqueous acetic acid solution while performing stirring of the reaction liquid at 20°C. A solution was thus obtained which contained a (meth) acrylic block copolymer that was a triblock copolymer composed of a methacrylic polymer block (a1), an acrylic polymer block different from the acrylic polymer block (B) (hereinafter, such an acrylic polymer block will be written as "acrylic polymer block (B')") and a methacrylic polymer block (a2) linked in this order, i.e., (a1-B'-a2). The (meth) acrylic block polymer sampled from the solution had a Mn of 83,000 and a Mw/Mn of 1.19.

(Step (5))

While performing stirring, the solution obtained above was heated at 90°C for 90 minutes under a stream of nitrogen, and thereby acetate salts of the catalytic metals were formed. The reaction liquid was cooled to 25°C and was thereafter centrifuged with a centrifuge (himac CR22GII manufactured by Hitachi Koki Co., Ltd.) at a centrifugal force of 18,800 G for 30 minutes to precipitate the acetate salts. The supernatant was recovered, and the solvent was removed from the recovered supernatant at 60°C with use of an evaporator. The residue was dried at 100°C and 30 Pa, and the (meth) acrylic block copolymer (hereinafter, written as "(meth)acrylic block copolymer (1')") weighing 408 g was obtained. The viscosity of the (meth)acrylic block copolymer (1') was measured. The result is described in Table 1.

(Step (6))

As a photopolymerization initiator, 1-hydroxycyclohexyl phenyl ketone (IRGACURE 184 manufactured by Ciba Specialty Chemicals) was added in a ratio of 2 g to 100 g of the (meth)acrylic block copolymer (1'), and was dissolved therein by stirring. Thus, 102 g of an active energy ray curable composition was obtained. The curing rate of the active energy ray curable composition was evaluated. The result is described in Table 2.

[Comparative Example 2]

(Step (1))

The inside of a 3 L flask was dried and purged with nitrogen, and 1.30 kg of toluene was added thereto. While performing stirring of the solution in the flask, there were sequentially added 3.1 g (13.7 mmol) of 1,1,4,7,10,10-hexamethyltriethylenetetramine as a Lewis base and 29.6 g (15.0 mmol) of a 26.4 mass% toluene solution of isobutylbis(2,6-di-t-butyl-4-methylphenoxy)aluminum as an organoaluminum compound. The mixture was cooled to -20°C. Further, 7.9 g (13.0 mmol) of a 10.5 mass% cyclohexane solution of sec-butyllithium as an organolithium compound was added, followed by the addition at once of 17.2 g of a monomer mixture which included 9.4 g (39 mmol) of 1,1-dimethylpropane-1,3-diol dimethacrylate and 7.8 g (78 mmol) of methyl methacrylate. Anionic polymerization was thus initiated. After the completion of the addition of the mixture, the reaction liquid turned from original yellow to colorless in 160 minutes. The reaction liquid was stirred for another 20 minutes, and was sampled.

In Step (1), the rates of consumption of 1,1-dimethylpropane-1,3-diol dimethacrylate and methyl methacrylate

were 100%. The polymer obtained had a Mn (Mn (R1)) of 1,330 and a Mw/Mn of 1.16. Further, the polymerization initiation efficiency (F1) in Step (1) was 99%.

(Step (2))

Subsequently, while performing stirring of the reaction liquid at -20°C, 18.0 g (9.1 mmol) of a 26.4 mass% toluene solution of isobutylbis(2,6-di-t-butyl-4-methylphenoxy)aluminum as an organoaluminum compound was added. After 1 minute thereafter, 446 g (3.48 mol) of n-butyl acrylate as a monomer was added at a rate of 5 g/min. Immediately after the completion of the addition of the monomer, the reaction liquid was sampled.

In Step (2), the rate of consumption of n-butyl acrylate was 100%. The polymer obtained had a Mn (Mn (R2)) of 41,200 and a Mw/Mn of 1.18. Further, the block efficiency (F2) between Step (1) and Step (2) was 87%.

(Step (3))

Subsequently, while performing stirring of the reaction liquid at -20°C, there was added at once 14.8 g of a monomer mixture which included 8.1 g (33.6 mmol) of 1,1-dimethylpropane-1,3-diol dimethacrylate and 6.7 g (67.3 mmol) of methyl methacrylate. The temperature was increased to 20°C at a rate of 2°C/min. The reaction liquid was sampled after 120 minutes from the addition of the mixture.

In Step (3), the rates of consumption of 1,1-dimethylpropane-1,3-diol dimethacrylate and methyl methacrylate were 100%.

(Step (4))

The anionic polymerization was terminated by adding 29.4 g of a 50 mass% aqueous acetic acid solution while performing stirring of the reaction liquid at 20°C. A solution was thus obtained which contained a (meth) acrylic block copolymer that was a triblock copolymer composed of a methacrylic polymer block (a1), an acrylic polymer block (B') and a methacrylic polymer block (a2) linked in this order, i.e., (a1-B'-a2). The (meth)acrylic block polymer sampled from the solution had a Mn of 42,600 and a Mw/Mn of 1.19.

(Step (5))

While performing stirring, the solution obtained above was heated at 90°C for 90 minutes under a stream of nitrogen, and thereby acetate salts of the catalytic metals were formed. The reaction liquid was cooled to 25°C and was thereafter centrifuged with a centrifuge (himac CR22GII manufactured by Hitachi Koki Co., Ltd.) at a centrifugal force of 18,800 G for 30 minutes to precipitate the acetate salts. The supernatant was recovered, and the solvent was removed from the recovered supernatant at 60°C with use of an evaporator. The residue was dried at 100°C and 30 Pa, and the (meth) acrylic block copolymer (hereinafter, written as " (meth) acrylic block copolymer (2')") weighing 460 g was obtained. The viscosity of the (meth)acrylic block copolymer (2') was measured. The result is described in Table 1.

(Step (6))

As a photopolymerization initiator, 1-hydroxycyclohexyl phenyl ketone (IRGACURE 184 manufactured by Ciba Specialty Chemicals) was added in a ratio of 2 g to 100 g of the (meth) acrylic block copolymer (2'), and was dissolved therein by stirring. Thus, 102 g of an active energy ray curable composition was obtained. The curing rate of the active energy ray curable composition was evaluated. The result is described in Table 2.

[Comparative Example 3]

(Step (1))

The inside of a 3 L flask was dried and purged with nitrogen, and 1.30 kg of toluene was added thereto. While performing stirring of the solution in the flask, there were sequentially added 3.1 g (13.7 mmol) of 1,1,4,7,10,10-hexamethyltriethylenetetramine as a Lewis base and 29.6 g (15.0 mmol) of a 26.4 mass% toluene solution of isobutylbis(2,6-di-t-butyl-4-methylphenoxy)aluminum as an organoaluminum compound. The mixture was cooled to -20°C. Further, 7.9 g (13.0 mmol) of a 10.5 mass% cyclohexane solution of sec-butyllithium as an organolithium compound was added, followed by the addition at once of 17.2 g of a monomer mixture which included 9.4 g (39 mmol) of 1,1-dimethylpropane-1,3-diol dimethacrylate and 7.8 g (39.4 mmol) of 2-ethylhexyl methacrylate. Anionic polymerization was thus initiated. After the completion of the addition of the mixture, the reaction liquid turned from original yellow to colorless in 160

minutes. The reaction liquid was stirred for another 20 minutes, and was sampled.

In Step (1), the rates of consumption of 1,1-dimethylpropane-1,3-diol dimethacrylate and 2-ethylhexyl methacrylate were 100%. The polymer obtained had a Mn (Mn (R1)) of 1,320 and a Mw/Mn of 1.14. Further, the polymerization initiation efficiency (F1) in Step (1) was 100%.

(Step (2))

Subsequently, while performing stirring of the reaction liquid at -20°C, 18.0 g (9.1 mmol) of a 26.4 mass% toluene solution of isobutylbis(2,6-di-t-butyl-4-methylphenoxy)aluminum as an organoaluminum compound was added. After 1 minute thereafter, 450 g (2.44 mol) of 2-ethylhexyl acrylate as a monomer was added at a rate of 5 g/min. Immediately after the completion of the addition of the monomer, the reaction liquid was sampled.

In Step (2), the rate of consumption of 2-ethylhexyl acrylate was 100%. The polymer obtained had a Mn (Mn (R2)) of 33,500 and a Mw/Mn of 1.17. Further, the block efficiency (F2) between Step (1) and Step (2) was 108%.

(Step (3))

Subsequently, while performing stirring of the reaction liquid at -20°C, there was added at once 15.0 g of a monomer mixture which included 8.2 g (33.9 mmol) of 1,1-dimethylpropane-1,3-diol dimethacrylate and 6.8 g (34.3 mmol) of 2-ethylhexyl methacrylate. The temperature was increased to 20°C at a rate of 2°C/min. The reaction liquid was sampled after 120 minutes from the addition of the mixture.

In Step (3), the rates of consumption of 1,1-dimethylpropane-1,3-diol dimethacrylate and 2-ethylhexyl methacrylate were 100%.

(Step (4))

The anionic polymerization was terminated by adding 29.4 g of a 50 mass% aqueous acetic acid solution while performing stirring of the reaction liquid at 20°C. A solution was thus obtained which contained a (meth)acrylic block copolymer that was a triblock copolymer composed of a methacrylic polymer block different from the methacrylic polymer block (a1) (hereinafter, such a methacrylic polymer block will be written as "methacrylic polymer block (al')"), an acrylic polymer block (B) and a methacrylic polymer block (a2') linked in this order, i.e., (a1'-B-a2'). The (meth) acrylic block polymer sampled from the solution had a Mn of 34,800 and a Mw/Mn of 1.19.

(Step (5))

While performing stirring, the solution obtained above was heated at 90°C for 90 minutes under a stream of nitrogen, and thereby acetate salts of the catalytic metals were formed. The reaction liquid was cooled to 25°C and was thereafter centrifuged with a centrifuge (himac CR22GII manufactured by Hitachi Koki Co., Ltd.) at a centrifugal force of 18,800 G for 30 minutes to precipitate the acetate salts. The supernatant was recovered, and the solvent was removed from the recovered supernatant at 60°C with use of an evaporator. The residue was dried at 100°C and 30 Pa, and the (meth) acrylic block copolymer (hereinafter, written as " (meth)acrylic block copolymer (3') ") weighing 465 g was obtained. The viscosity of the (meth)acrylic block copolymer (3') was measured. The result is described in Table 1.

(Step (6))

As a photopolymerization initiator, 1-hydroxycyclohexyl phenyl ketone (IRGACURE 184 manufactured by Ciba Specialty Chemicals) was added in a ratio of 2 g to 100 g of the (meth)acrylic block copolymer (3'), and was dissolved therein by stirring. Thus, 102 g of an active energy ray curable composition was obtained. The curing rate of the active energy ray curable composition was evaluated. The result is described in Table 2.

[Comparative Example 4]

(Step (1))

The inside of a 3 L flask was dried and purged with nitrogen, and 1.30 kg of toluene was added thereto. While performing stirring of the solution in the flask, there were sequentially added 1.6 g (6.8 mmol) of 1,1,4,7,10,10-hexamethyltriethylenetetramine as a Lewis base and 16.1 g (8.1 mmol) of a 26.4 mass% toluene solution of isobutylbis(2,6-di-t-butyl-4-methylphenoxy)aluminum as an organoaluminum compound. The mixture was cooled to -20°C. Further, 4.0 g (6.5 mmol) of a 10.5 mass% cyclohexane solution of sec-butyllithium as an organolithium compound was added,

followed by the addition at once of 8.6 g of a monomer mixture which included 4.7 g (19.5 mmol) of 1,1-dimethylpropane-1,3-diol dimethacrylate and 3.9 g (39 mmol) of methyl methacrylate. Anionic polymerization was thus initiated. After the completion of the addition of the mixture, the reaction liquid turned from original yellow to colorless in 160 minutes. The reaction liquid was stirred for another 20 minutes, and was sampled.

In Step (1), the rates of consumption of 1,1-dimethylpropane-1,3-diol dimethacrylate and methyl methacrylate were 100%. The polymer obtained had a Mn (Mn (R1)) of 1,330 and a Mw/Mn of 1.15. Further, the polymerization initiation efficiency (F1) in Step (1) was 99%.

(Step (2))

Subsequently, while performing stirring of the reaction liquid at -20°C, 12.9 g (6.5 mmol) of a 26.4 mass% toluene solution of isobutylbis(2,6-di-t-butyl-4-methylphenoxy)aluminum as an organoaluminum compound was added. After 1 minute thereafter, 410 g (2.22 mol) of 2-ethylhexyl acrylate as a monomer was added at a rate of 5 g/min. Immediately after the completion of the addition of the monomer, the reaction liquid was sampled.

In Step (2), the rate of consumption of 2-ethylhexyl acrylate was 100%. The polymer obtained had a Mn (Mn (R2)) of 65,600 and a Mw/Mn of 1.19. Further, the block efficiency (F2) between Step (1) and Step (2) was 99%.

(Step (3))

The anionic polymerization was terminated by adding 32.6 g of a 50 mass% aqueous acetic acid solution while performing stirring of the reaction liquid at -20°C. A solution was thus obtained which contained a (meth)acrylic block copolymer that was a diblock copolymer composed of a methacrylic polymer block (a1) and an acrylic polymer block (B) linked in this order, i.e., (a1-B).

(Step (4))

While performing stirring, the solution obtained above was heated at 90°C for 90 minutes under a stream of nitrogen, and thereby acetate salts of the catalytic metals were formed. The reaction liquid was cooled to 25°C and was thereafter centrifuged with a centrifuge (himac CR22GII manufactured by Hitachi Koki Co., Ltd.) at a centrifugal force of 18, 800 G for 30 minutes to precipitate the acetate salts. The supernatant was recovered, and the solvent was removed from the recovered supernatant at 60°C with use of an evaporator. The residue was dried at 100°C and 30 Pa, and the (meth) acrylic block copolymer (hereinafter, written as " (meth) acrylic block copolymer (4')") weighing 400 g was obtained. The viscosity of the (meth)acrylic block copolymer (4') was measured. The result is described in Table 1.

(Step (5))

As a photopolymerization initiator, 1-hydroxycyclohexyl phenyl ketone (IRGACURE 184 manufactured by Ciba Specialty Chemicals) was added in a ratio of 2 g to 100 g of the (meth)acrylic block copolymer (4'), and was dissolved therein by stirring. Thus, 102 g of an active energy ray curable composition was obtained. The curing rate of the active energy ray curable composition was evaluated. The result is described in Table 2.

[Table 1]

<table>
<tr><th colspan="3">(Meth)acrylic block copolymers</th><th>(1)</th><th>(1')</th><th>(2')</th><th>(3')</th><th>(4')</th></tr>
<tr><td rowspan="5">Contents (mass%) *1</td><td rowspan="3">Methacrylic polymer block</td><td>DMA *2</td><td>2.0 (56)</td><td>2.0 (56)</td><td>3.7 (56)</td><td>3.7 (56)</td><td>1.1 (56)</td></tr>
<tr><td>MMA *3</td><td>1.6 (44)</td><td>1.6 (44)</td><td>3.0 (44)</td><td>0 (0)</td><td>0.9 (44)</td></tr>
<tr><td>2EHMA *4</td><td>0 (0)</td><td>0 (0)</td><td>0 (0)</td><td>3.0 (44)</td><td>0 (0)</td></tr>
<tr><td rowspan="2">Acrylic polymer block</td><td>2EHA *5</td><td>96.4 (100)</td><td>0 (0)</td><td>0 (0)</td><td>93.3 (100)</td><td>98.0 (100)</td></tr>
<tr><td>BA *6</td><td>0 (0)</td><td>96.4 (100)</td><td>93.3 (100)</td><td>0 (0)</td><td>0 (0)</td></tr>
<tr><td colspan="3">Order of linking of polymer blocks</td><td>A-B-A</td><td>A-B'-A</td><td>A-B'-A</td><td>A'-B-A'</td><td>A-B</td></tr>
</table>

(continued)

| (Meth)acrylic block copolymers | (1) | (1') | (2') | (3') | (4') |
|---|---|---|---|---|---|
| Viscosity (Pa·s) | 3600 | 7500 | 1900 | 250 | 900 |
| *1: The values in parenthesis mean the contents in the respective polymer blocks.<br>*2: DMA = monomer units derived from 1,1-dimethylpropane-1,3-diol dimethacrylate<br>*3: MMA = monomer units derived from methyl methacrylate<br>*4: 2EHMA = monomer units derived from 2-ethylhexyl methacrylate<br>*5: 2EHA = monomer units derived from 2-ethylhexyl acrylate<br>*6: BA = monomer units derived from n-butyl acrylate | | | | | |

[Table 2]

| | Ex. 1 | Comp. Ex. 1 | Comp. Ex. 2 | Comp. Ex. 3 | Comp. Ex. 4 |
|---|---|---|---|---|---|
| (Meth)acrylic block copolymer (parts by mass) | (1) | (1') | (2') | (3') | (4') |
| | 100 | 100 | 100 | 100 | 100 |
| Photopolymerization initiator (parts by mass) | 2 | 2 | 2 | 2 | 2 |
| Reaction degree (%) | 90.4 | 81.4 | 70.7 | 50.3 | 8.2 |

As shown in Tables 1 and 2, the active energy ray curable composition containing the (meth)acrylic block copolymer (1) attained a high curing rate.

The (meth)acrylic block copolymer (1') in which the acrylic polymer block had no monomer units derived from an alkyl acrylate ester having an alkyl group with 6 or more carbon atoms showed a higher viscosity than the (meth)acrylic block copolymer (1). The reason for this is probably because the (meth)acrylic block copolymer (1) had a reduced amount of entanglement of the acrylic polymer block (B) segments with one another by their alkyl groups with 6 or more carbon atoms. Thus, active energy ray curable compositions which contain the (meth)acrylic block copolymer according to the present invention tend to exhibit excellent application properties. The active energy ray curable composition of Comparative Example 1 which contained the (meth)acrylic block copolymer (1') showed a low curing rate.

In the (meth)acrylic block copolymer (2') in which the acrylic polymer block had no monomer units derived from an alkyl acrylate ester having an alkyl group with 6 or more carbon atoms, the content of 1,1-dimethylpropane-1,3-diol dimethacrylate units, which had active energy ray curable groups, was higher than in the (meth)acrylic block copolymer (1). However, the active energy ray curable composition of Comparative Example 2 which contained this (meth)acrylic block copolymer (2') showed a low curing rate.

Similarly, in the (meth)acrylic block copolymer (3') in which the methacrylic polymer blocks had no monomer units derived from methyl methacrylate, the content of 1,1-dimethylpropane-1,3-diol dimethacrylate units, which had active energy ray curable groups, was higher than in the (meth) acrylic block copolymer (1). However, the active energy ray curable composition of Comparative Example 3 which contained this (meth) acrylic block copolymer (3') was slow in curing too.

The (meth)acrylic block copolymer (4') was a diblock copolymer and thus the acrylic polymer block (B) was not present between the methacrylic polymer block (a1) and the methacrylic polymer block (a2). The active energy ray curable composition of Comparative Example 4 which contained this (meth)acrylic block copolymer (4') showed a low curing rate.

From the foregoing, it has been demonstrated that active energy ray curable compositions containing the (meth)acrylic block copolymer of the invention attain a high curing rate.

## Claims

1. A (meth)acrylic block copolymer comprising a methacrylic polymer block (a1) and a methacrylic polymer block (a2) that each have an active energy ray curable group including a partial structure (1) of the following general formula (1), and further comprising an acrylic polymer block (B) that has no active energy ray curable groups and is present between the methacrylic polymer block (a1) and the methacrylic polymer block (a2),
   the content of monomer units derived from methyl methacrylate relative to all monomer units in the methacrylic polymer block (a1) and the methacrylic polymer block (a2) being not less than 30 mass%,

the content of monomer units derived from an alkyl acrylate ester having an alkyl group with 6 or more carbon atoms relative to all monomer units in the acrylic polymer block (B) being not less than 40 mass%,

[Chem. 1]

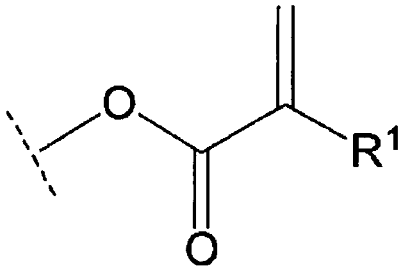

(1)

wherein in the formula (1), $R^1$ is a hydrogen atom or a hydrocarbon group with 1 to 20 carbon atoms.

2. The (meth)acrylic block copolymer according to Claim 1, wherein the partial structure (1) is part of a partial structure represented by the following general formula (2),

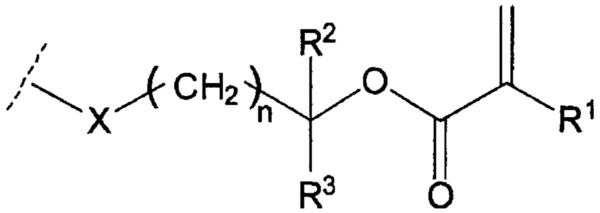

(2)

wherein in the formula (2), $R^1$ is a hydrogen atom or a hydrocarbon group having 1 to 20 carbon atoms, $R^2$ and $R^3$ are each independently a hydrocarbon group having 1 to 6 carbon atoms, X is O, S or $N(R^4)$ ($R^4$ is a hydrogen atom or a hydrocarbon group having 1 to 6 carbon atoms), and n is an integer of 1 to 20.

3. An active energy ray curable composition comprising the (meth)acrylic block copolymer described in Claim 1.

## Patentansprüche

1. (Meth)acrylblockcopolymer, umfassend einen Methacrylpolymerblock (a1) und einen Methacrylpolymerblock (a2), welche jeweils eine durch aktive Energiestrahlung härtbare Gruppe aufweisen, einschließend eine Teilstruktur (1) der folgenden allgemeinen Formel (1), und weiter umfassend einen Acrylpolymerblock (B), der keine durch aktive Energiestrahlung härtbaren Gruppen aufweist und zwischen dem Methacrylpolymerblock (a1) und dem Methacrylpolymerblock (a2) vorliegt,
wobei der Anteil an Monomereinheiten, abgeleitet von Methylmethacrylat, relativ zu sämtlichen Monomereinheiten in dem Methacrylpolymerblock (a1) und dem Methacrylpolymerblock (a2) nicht weniger als 30 Masse-% beträgt,
wobei der Anteil an Monomereinheiten abgeleitet von einem Alkylacrylatester mit einer Alkylgruppe mit 6 oder mehr Kohlenstoffatomen relativ zu sämtlichen Monomereinheiten in dem Acrylpolymerblock (B) nicht weniger als 40 Masse-% beträgt,

[Chem. 1]

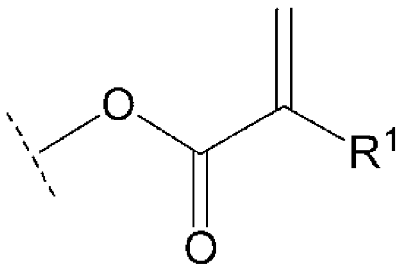

(1)

wobei in der Formel (1) $R^1$ ein Wasserstoffatom oder eine Kohlenwasserstoffgruppe mit 1 bis 20 Kohlenstoffatomen ist.

2. (Meth)acrylblockcopolymer gemäß Anspruch 1, wobei die Teilstruktur (1) Teil einer Teilstruktur, dargestellt durch die folgende allgemeine Formel (2), ist,

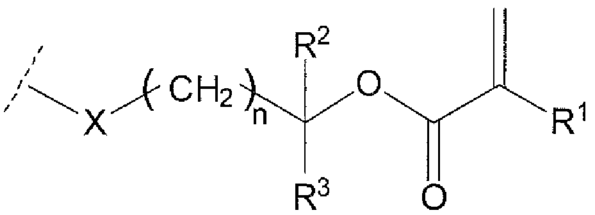

(2)

wobei in der Formel (2) $R^1$ ein Wasserstoffatom oder eine Kohlenwasserstoffgruppe mit 1 bis 20 Kohlenstoffatomen ist, $R^2$ und $R^3$ jeweils unabhängig voneinander ein Kohlenwasserstoffrest mit 1 bis 6 Kohlenstoffatomen sind, X O, S oder $N(R^4)$ ($R^4$ ist ein Wasserstoffatom oder eine Kohlenwasserstoffgruppe mit 1 bis 6 Kohlenstoffatomen) ist und n eine ganze Zahl von 1 bis 20 ist.

3. Zusammensetzung, durch aktive Energiestrahlung härtbar, umfassend das (Meth)acrylblockcopolymer, wie in Anspruch 1 beschrieben.

**Revendications**

1. Copolymère (méth)acrylique séquencé comprenant une séquence de polymère méthacrylique (a1) et une séquence de polymère méthacrylique (a2), qui ont chacune un groupe réticulable par des rayons énergétiquement actifs ayant une structure partielle (1) de la formule générale (1) suivante, et comprenant en outre une séquence de polymère acrylique (B) qui ne comprend pas de groupe réticulable par des rayons énergétiquement actifs et qui est présente entre la séquence de polymère méthacrylique (a1) et la séquence de polymère méthacrylique (a2),
la teneur en unités monomères dérivées du méthacrylate de méthyle par rapport à toutes les unités monomères dans la séquence de polymère méthacrylique (a1) et la séquence de polymère méthacrylique (a2) étant non inférieure à 30% en masse, la teneur en unités monomères dérivées d'un ester acrylate d'alkyle ayant un groupe alkyle de 6 atomes de carbone ou plus par rapport à toutes les unités monomères de la séquence de polymère acrylique (B) étant non inférieure à 40% en masse,

[formule chimique 1]

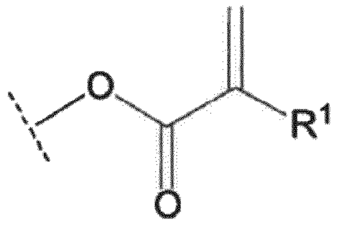

(1)

dans lequel dans la formule (1), $R^1$ est un atome d'hydrogène ou un groupe hydrocarboné ayant 1 à 20 atomes de carbone.

2. Copolymère (méth)acrylique séquencé selon la revendication 1, dans lequel la structure partielle (1) fait partie d'une structure partielle représentée par la formule générale (2) suivante,

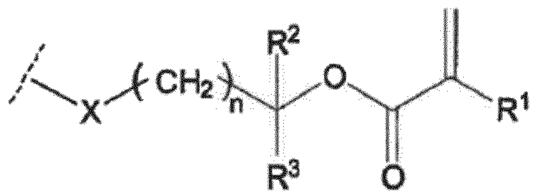

(2)

où dans la formule (2), $R^1$ est un atome d'hydrogène ou un groupe hydrocarboné ayant 1 à 20 atomes de carbone, $R^2$ et $R^3$ sont chacun indépendamment, un groupe hydrocarboné ayant 1 à 6 atomes de carbone, X est O, S ou $N(R^4)$ ($R^4$ est un atome d'hydrogène ou un groupe hydrocarboné ayant 1 à 6 atomes de carbone) et n est un entier allant de 1 à 20.

3. Composition réticulable par des rayons énergétiquement actifs comprenant le copolymère (méth)acrylique séquencé selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011184678 A
- WO 2014148251 A
- WO 2004014926 A
- JP 3839829 B
- JP 3639859 B
- JP 3040172 B
- WO 2004013192 A
- JP H0693060 A
- JP H05507737 A
- JP H11335432 A
- WO 2013141105 A